# EUROPEAN PATENT APPLICATION

(11) **EP 4 187 470 A1**
(43) Date of publication of application: **31.05.2023**
(21) Application number: 22208308.1
(22) Date of filing: 18.11.2022
(51) Int. Cl.: G06Q 30/04, G06Q 20/10

(54) **INFORMATION PROCESSING APPARATUS, INFORMATION PROCESSING SYSTEM, INFORMATION PROCESSING METHOD, AND CARRIER MEANS**

(30) Priority: 29.11.2021 JP 2021193191; 28.02.2022 JP 2022029352
(71) Applicant: Ricoh Company, Ltd., Tokyo 143-8555 (JP)
(72) Inventor: Aruga, Ryoh, Tokyo, 143-8555 (JP); Mihara, Ayumi, Tokyo, 143-8555 (JP); Tomiyoshi, Takafumi, Tokyo, 143-8555 (JP)
(74) Representative: Marks & Clerk LLP

(57) **Abstract**

An information processing apparatus (200) includes an input reception unit (201, 263) to receive an import operation for importing form image data of a form and form information included in the form, a registration unit (201, 265) to register form management information in which the form image data and the form information are associated with each other, and a display control unit (201, 264) to display, on a terminal device (400), a management screen for managing the form, based on the form management information.

## Description

### BACKGROUND

### Technical Field

The present disclosure relates to an information processing apparatus, an information processing system, an information processing method, and a carrier means.

### Related Art

Payment management systems for managing payments from payment sources have been known. As an example, there is a known system in which an invoice issued by a payment management device is transmitted to a customer, and a payment completion notification of a payment performed according to the invoice is associated with the invoice and received (for example, Japanese Unexamined Patent Application Publication No.2002-183630).

In such a related art, when an invoice is issued by a system, the invoice is failed to be associated with payment performed according to the invoice, and the payment corresponding to the invoice is not managed.

### SUMMARY

An embodiment of the present disclosure includes an information processing apparatus includes an input reception unit to receive an import operation for importing form image data of a form and form information included in the form, a registration unit to register form management information in which the form image data and the form information are associated with each other, and a display control unit to display, on a terminal device, a management screen for managing the form, based on the form management information.

An embodiment of the present disclosure includes an information processing system. The information processing system includes the above-described information processing apparatus and a terminal device. The terminal device includes a display unit to display, on a display, the management screen.

An embodiment of the present disclosure includes an information processing method including receiving an import operation for importing form image data of a form and form information included in the form, registering form management information in which the form image data and the form information are associated with each other, and displaying, on a terminal device, a management screen for managing the form, based on the form management information.

An embodiment of the present disclosure includes a carrier means carrying computer readable codes for controlling a computer system to carry out the above-described method.

According to an embodiment of the disclosure, a form issued by an external system can be managed.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of a system configuration of a transaction management system according to a first embodiment of the disclosure;
FIG. 2 is a diagram illustrating an example of a hardware configuration of a transaction management apparatus according to the first embodiment of the disclosure;
FIG. 3 is a block diagram illustrating a hardware configuration of a terminal device according to the first embodiment of the disclosure;
FIG. 4 is a diagram illustrating an example of a tenant management database according to the first embodiment of the disclosure;
FIG. 5 is a diagram illustrating an example of an invoice management database according to the first embodiment of the disclosure;
FIG. 6 is a block diagram illustrating the functional configuration of each apparatus included in the transaction management system according to the first embodiment of the disclosure;
FIG. 7 is a sequence diagram illustrating a process performed by the transaction management system according to the first embodiment of the disclosure;
FIG. 8 is a diagram illustrating an example of a comma-separated values (CSV) file according to the first embodiment of the disclosure;
FIG. 9 is a diagram illustrating a first display example of a seller terminal according to the first embodiment of the disclosure;
FIG. 10 is a diagram illustrating a second display example of the seller terminal according to the first embodiment of the disclosure;
FIG. 11 is a diagram illustrating a third display example of the seller terminal according to the first embodiment of the disclosure;
FIG. 12 is a diagram illustrating a fourth display example of the seller terminal according to the first embodiment of the disclosure;
FIG. 13 is a sequence diagram illustrating another operation of the transaction management system according to the first embodiment of the disclosure;
FIG. 14 is a flowchart illustrating a process performed by the transaction management apparatus according to the first embodiment of the disclosure;
FIG. 15 is a diagram illustrating a fifth display example of the seller terminal according to the first embodiment of the disclosure;
FIG. 16 is a diagram illustrating a sixth display example of the seller terminal according to the first embodiment of the disclosure;
FIG. 17 is a sequence diagram illustrating still another operation of the transaction management system according to the first embodiment of the disclosure;
FIG. 18 is a diagram illustrating a seventh display example of the seller terminal according to the first embodiment of the disclosure;
FIG. 19 is a flowchart illustrating another process performed by the transaction management apparatus according to the first embodiment of the disclosure;
FIG. 20 is a flowchart illustrating still another process performed by the transaction management apparatus according to the first embodiment of the disclosure;
FIG. 21 is a diagram illustrating an eighth display example of the seller terminal according to the first embodiment of the disclosure;
FIG. 22 is a diagram illustrating another example of an invoice management database according to the first embodiment of the disclosure;
FIG. 23 is a diagram illustrating a ninth display example of the seller terminal according to the first embodiment of the disclosure;
FIG. 24 is a diagram illustrating still another example of an invoice management database according to the first embodiment of the disclosure;
FIG. 25 is a diagram illustrating a tenth display example of the seller terminal according to the first embodiment of the disclosure;
FIG. 26 is a diagram illustrating a functional configuration of each apparatus included in a transaction management system according to a second embodiment of the disclosure;
FIG. 27 is a diagram illustrating an example of an invoice management database according to the second embodiment of the disclosure;
FIG. 28 is a sequence diagram illustrating an operation of a transaction management system according to the second embodiment of the disclosure;
FIG. 29 is a diagram illustrating a display example of a seller terminal according to the second embodiment of the disclosure;
FIG. 30 is a second sequence diagram illustrating another operation of the transaction management system according to the second embodiment of the disclosure;
FIG. 31 is a diagram illustrating another display example of the seller terminal according to the second embodiment of the disclosure;
FIG. 32 is a diagram illustrating still another display example of the seller terminal according to the second embodiment of the disclosure;
FIG. 33 is a diagram illustrating a functional configuration of each apparatus included in a transaction management system according to a third embodiment of the disclosure;
FIG. 34 is a sequence diagram illustrating an operation of the transaction management system according to the third embodiment of the disclosure;
FIG. 35 is a diagram illustrating a functional configuration of each apparatus included in a transaction management system according to a fourth embodiment of the disclosure; and
FIG. 36 is a sequence diagram illustrating an operation of the transaction management system according to the fourth embodiment of the disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment:

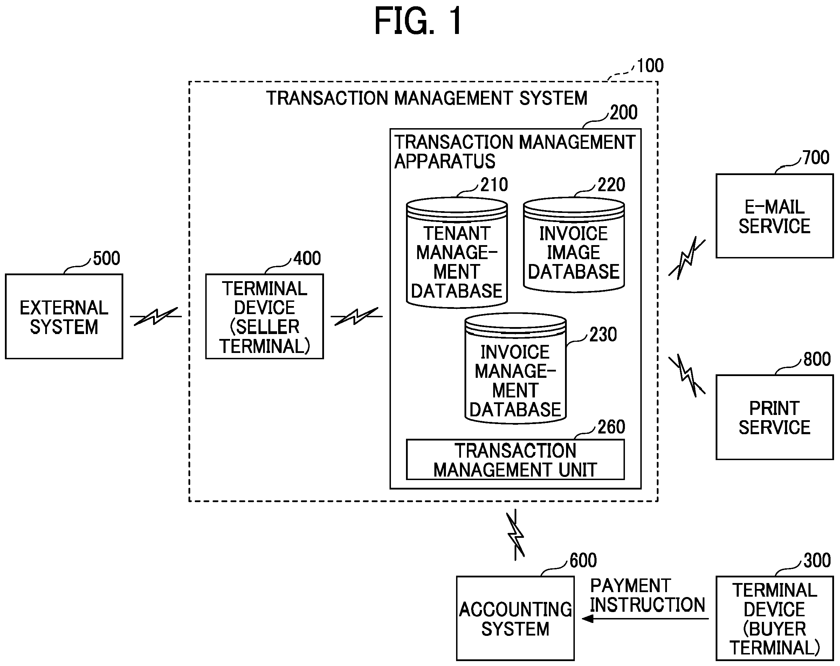

A description is given below of an embodiment of the present disclosure, with reference to drawings. FIG. 1 is a diagram illustrating an example of a system configuration of a transaction management system according to an embodiment. The transaction management system is an example of an information processing system.

A transaction management system 100 according to the present embodiment includes a transaction management apparatus 200 and a terminal device 400, and the transaction management apparatus 200 and the terminal device 400 are connected via a network, for example. The transaction management apparatus 200 is an example of an information processing apparatus.

The transaction management system 100 according to the present embodiment is used by, for example, a business operator or an individual who performs a sales transaction, and the transaction management apparatus 200 mainly manages an invoice issued at the time of the sales transaction. Managing an invoice in the present embodiment includes, for example, confirming whether a payment has been received from a billing destination (buyer) by a payment due date described in the invoice, reminding the billing destination (buyer) to perform an action to complete the payment when the payment is not confirmed even after the payment due date, clearing an amount of trade receivable by verifying a paid amount with the billed amount. The management of an invoice may include management of a history of sending an invoice to the billing destination.

In the following description, an invoice issued mainly at the time of a sales transaction is described as an example of a form, but the form may be another document other than an invoice. Specifically, for example, the form may be an order sheet, a delivery sheet, or an estimate sheet.

The terminal device 400 according to the present embodiment is a terminal device mainly used by a seller in a sales transaction. In the following description, the terminal device 400 may be referred to as a seller terminal 400. The terminal device 400 includes various terminal devices such as a smart terminal (smart phone) and a tablet terminal in addition to a personal computer (PC). The same applies to a terminal device 300 described later.

In the following description, a user who uses a service provided by the transaction management system 100 according to the present embodiment may be referred to as a tenant. In other words, in the present embodiment, a tenant includes a business operator and an individual, such as a seller or a buyer, for example.

The transaction management system 100 according to the present embodiment manages invoice image data of an invoice issued by a seller in an external system 500 other than the transaction management system 100 and invoice information included in the invoice in association with each other.

The transaction management system 100 according to the present embodiment transmits the invoice image data of the invoice issued by the external system 500 to, for example, an e-mail service 700 and a print service 800. The e-mail service 700 may be a server that provides a service for transmitting the invoice image data of the invoice issued by the seller using the external system 500 to the buyer by e-mail. The print service 800 may be a server that provides a service for outputting the invoice image data of the invoice issued by the seller using the external system 500 as a printed matter.

The transaction management system 100 according to the present embodiment further receives, for example, a payment completion notification from an accounting system 600. For example, the payment completion notification may be output to the transaction management apparatus 200 after the accounting system 600 receives a payment instruction from the terminal device 300 and performs a payment process.

The terminal device 300 is a terminal device mainly used by a buyer in a sales transaction. The terminal device 300 may be referred to as a buyer terminal 300. The payment instruction from the terminal device 300 is a payment instruction according to the invoice issued by the seller using the external system 500.

The transaction management apparatus 200 according to the present embodiment includes a tenant management database 210, an invoice image database 220, an invoice management database 230, and a transaction management unit 260.

The tenant management database 210 stores information on tenants. In other words, the tenant management database 210 stores information on the seller. The invoice image database 220 stores form image data. The invoice management database 230 stores invoice management information for managing invoice information. The invoice management information associates the invoice information with the invoice image data.

When the invoice image data and the invoice information of the invoice issued by using the external system 500 are uploaded from the seller terminal 400, the transaction management unit 260 holds the invoice image data and the invoice information in association with each other. Accordingly, in the present embodiment, the invoice issued by the external system 500 is managed.

In the example illustrated in FIG. 1, the tenant management database 210, the invoice image database 220, and the invoice management database 230 are provided in the transaction management apparatus 200, but are not limited thereto. A part or all of these databases may be provided in another device, or another apparatus. The transaction management apparatus 200 may be implemented by a plurality of information processing apparatuses.

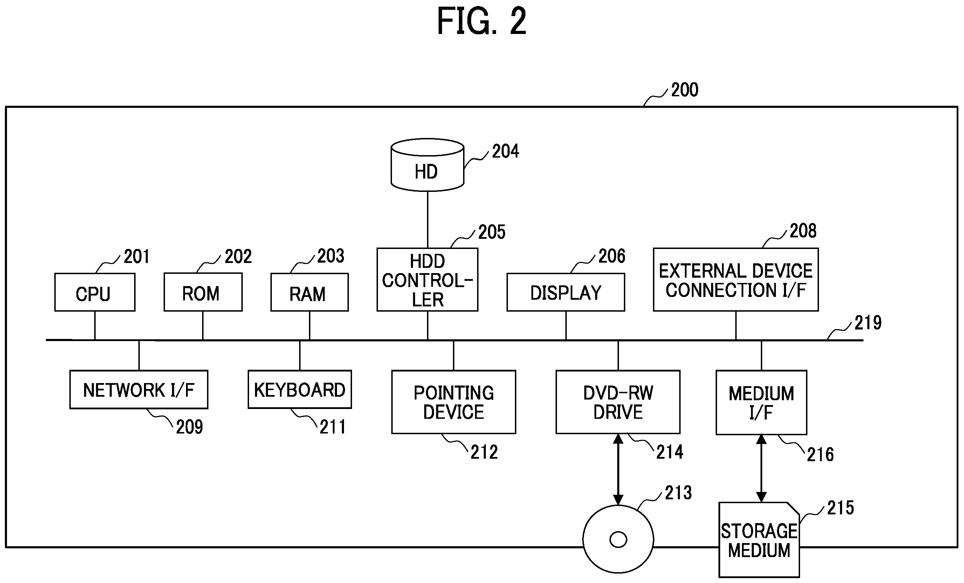

Next, a hardware configuration of an information processing apparatus that implements the transaction management apparatus 200 is described with reference to FIG. 2. FIG. 2 is a diagram illustrating an example of a hardware configuration of the transaction management apparatus 200 according to the present embodiment.

The transaction management apparatus 200 is implemented by a computer, and includes a central processing unit (CPU) 201, a read only memory (ROM) 202, a random access memory (RAM) 203, a hard disk (HD) 204, a hard disk drive (HDD) controller 205, a display 206, an external device connection interface (I/F) 208, a network I/F 209, a bus line 219, a keyboard 211, a pointing device 212, a digital versatile disk rewritable (DVD-RW) drive 214, and a medium I/F 216.

The CPU 201 controls the overall operation of the transaction management apparatus 200. The ROM 202 stores a program such as an initial program loader (IPL) used for driving the CPU 201. The RAM 203 is used as a work area for the CPU 201. The HD 204 stores various data such as a control program. The HDD controller 205 controls reading and writing of various data from and to the HD 204 under control of the CPU 201. The display 206 displays various information such as a cursor, menu, window, character, or image.

The external device connection I/F 208 is an interface for connecting various external devices. Examples of the external devices include, but not limited to, a universal serial bus (USB) memory and a printer. The network I/F 209 is an interface for performing data communication using a communication network. Examples of the bus line 219 include an address bus and a data bus, which electrically connect the components including the CPU 201, one another.

The keyboard 211 is an example of an input device provided with a plurality of keys for allowing a user to input characters, numerals, or various instructions. The pointing device 212 is an example of an input device that allows a user to select or execute a specific instruction, select a target for processing, or move a cursor being displayed. The DVD-RW drive 214 reads or writes various data from or to a DVD-RW 213, which is an example of a removable storage medium. The removable storage medium is not limited to the DVD-RW and may be a Digital Versatile Disc-Recordable (DVD-R) or the like. The medium I/F 216 controls reading or writing (storage) with respect to a recording medium 215 such as a flash memory.

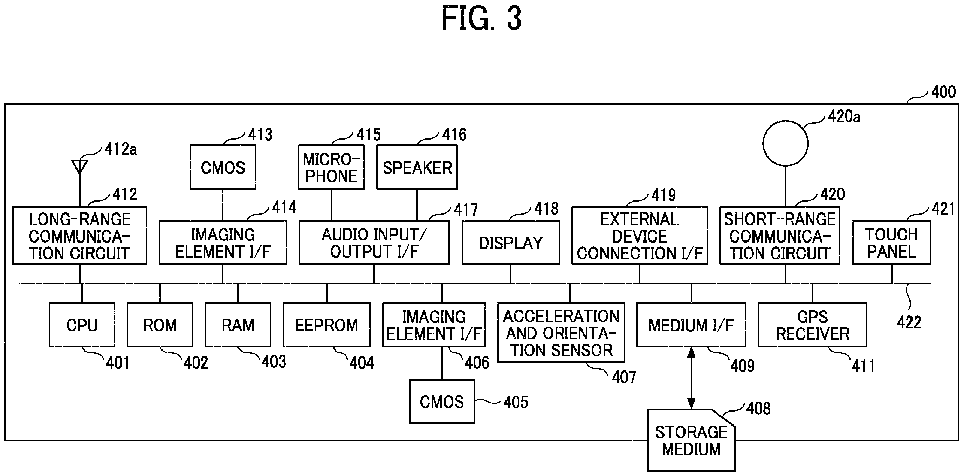

FIG. 3 is a block diagram illustrating a hardware configuration of the terminal device 400 according to the present embodiment. A description is given below of the hardware configuration of the terminal device 400 with reference to FIG. 3.

The terminal device 400 according to the present embodiment includes a CPU 401, a ROM 402, a RAM 403, an electrically erasable and programmable ROM (EEPROM) 404, a complementary metal oxide semiconductor (CMOS) sensor 405, an imaging element I/F 406, an acceleration and orientation sensor 407, a medium I/F 409, and a global positioning system (GPS) receiver 411.

The CPU 401 is a processor that controls entire operation of the terminal device 400. The ROM 402 stores a program for executing the CPU 401 such as an Initial Program Loader (IPL). The RAM 403 is used as a work area for the CPU 401. The EEPROM 404 reads or writes various data such as a control program for a terminal device under control of the CPU 401. The ROM 402, the RAM 403, and the EEPROM 404 are examples of storage devices of the terminal device 400. Examples of the bus line 422 include an address bus and a data bus, which electrically connect the components including the CPU 401, one another.

The CMOS sensor 405 is an example of a built-in imaging device that captures an object (mainly, a self-image of a user) under control of the CPU 401 and obtains image data. In alternative to the CMOS sensor 405, an imaging element such as a charge-coupled device (CCD) sensor may be used.

The imaging element I/F 406 is a circuit that controls driving of the CMOS sensor 405. The acceleration and orientation sensor 407 includes various sensors such as an electromagnetic compass for detecting geomagnetism, a gyrocompass, and an acceleration sensor. The medium I/F 409 controls reading or writing (storage) of data to a storage medium 408 such as a flash memory. The GPS receiver 411 receives a GPS signal from a GPS satellite.

The terminal device 400 includes a long-range communication circuit 412, an antenna 412a of the long-range communication circuit 412, a CMOS sensor 413, an imaging element I/F 414, a microphone 415, a speaker 416, an audio input/output I/F 417, a display 418, an external device connection I/F 419, a short-range communication circuit 420, an antenna 420a of the short-range communication circuit 420, and a touch panel 421.

The long-range communication circuit 412 is a circuit that allows communication with other devices through a communication network. The CMOS sensor 413 is a kind of built-in imaging unit that captures an image of a subject under the control of the CPU 401. The imaging element I/F 414 is a circuit that controls driving of the CMOS sensor 413. The microphone 415 is a built-in circuit that converts sound into an electric signal. The speaker 416 is a built-in circuit that generates sound such as music or voice by converting an electric signal into physical vibration. The audio input/output I/F 417 is a circuit for inputting and outputting an audio signal between the microphone 415 and the speaker 416 under the control of the CPU 401.

The display 418 is an example of a display device that displays an image of an object, various icons, etc. Examples of the display 418 include, but are not limited to, a liquid crystal display (LCD) and an organic electroluminescence (EL) display. The external device connection I/F 419 is an interface for connecting various external devices. The short-range communication circuit 420 is a communication circuit that communicates in compliance with the near field communication (NFC) or BLUETOOTH, for example. The touch panel 421 is an example of an input device that allows a user to input a user instruction to the terminal device 400 through touching a screen of the display 418. The display 418 is an example of a display (display device) included in the terminal device 400.

The buyer terminal 300 has substantially the same hardware configuration as the seller terminal 400. In addition, each of the buyer terminal 300 and the seller terminal 400 according to the present embodiment may have substantially the same hardware configuration as the transaction management apparatus 200.

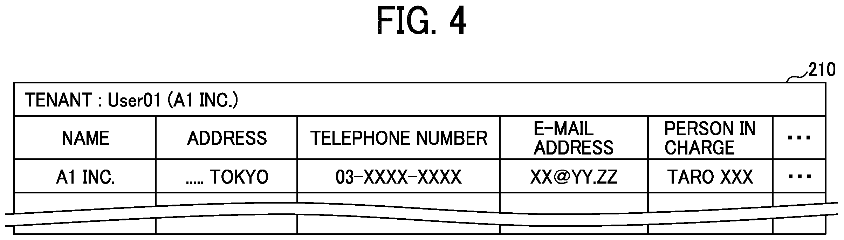

A description is given below of database included in the transaction management apparatus 200 according to the present embodiment, with reference to FIG. 4 to FIG. 5.

FIG. 4 is a diagram illustrating an example of the tenant management database 210 according to the first embodiment. The tenant management database 210 according to the present embodiment is provided for each tenant, for example. In addition, the tenant management database 210 according to the present embodiment includes information items of name, address, telephone number, e-mail address, and person in charge, and these items are associated with a tenant ID and a tenant name.

In the present embodiment, in the tenant management database 210, information including values of items of name, address, telephone number, mail address, and person in charge may be referred to as tenant information. The tenant ID and the tenant name are information for identifying a tenant. The value of the item of "NAME" indicates a name of a customer (billing destination) The values of the items of "ADDRESS," "TELEPHONE NUMBER," "MAIL ADDRESS," and "PERSON IN CHARGE" indicate, in relation to a billing destination, an address, a telephone number, an e-mail address, and a name of a person in charge of a transaction, respectively.

The information items included in the tenant information are not limited to the example illustrated in FIG. 4. The information items included in the tenant information may not include all the items illustrated in FIG. 4, or may include items other than the items illustrated in FIG. 4.

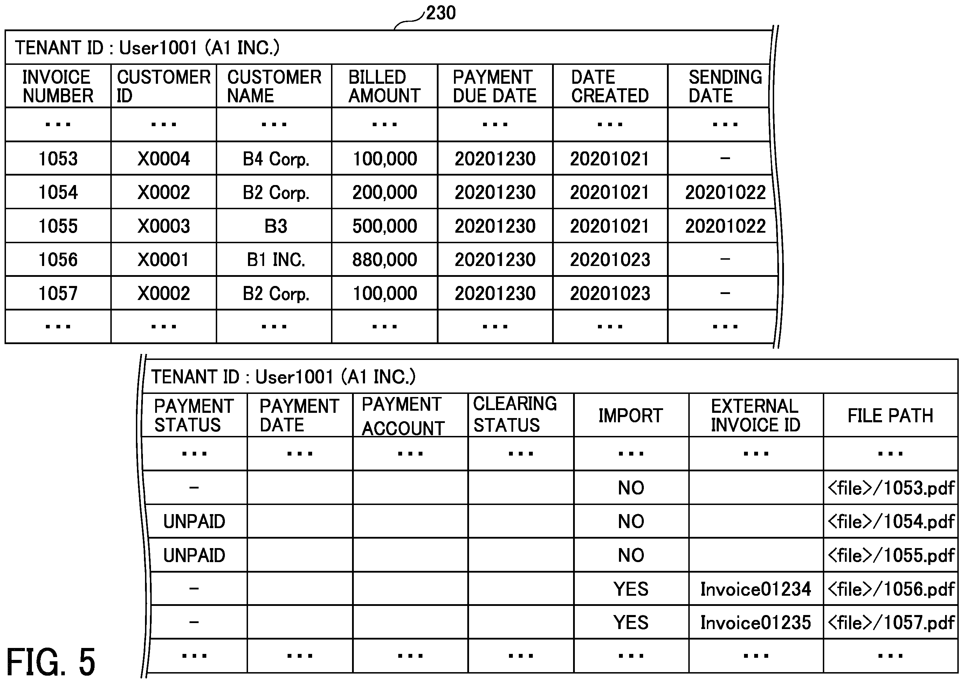

FIG. 5 is a diagram illustrating an example of the invoice management database 230 according to the first embodiment. The invoice management database 230 according to the present embodiment may be provided for each tenant.

The invoice management database 230 according to the present embodiment includes information items of invoice number, customer identification (ID), customer name, billed amount, payment due date, date created, sending date, payment status, payment date, payment account, clearing status, import, external invoice ID, and file path, for example.

In the invoice management database 230, the items of "invoice number" and tenant name are associated with the other items. In the following description, information including the value of the item of "INVOICE NUMBER," the tenant name, and the values of the other items are collectively referred to as invoice management information.

The invoice management database 230 stores both invoice management information for managing invoice information of an invoice issued by the external system 500 and invoice management information for managing invoice information of an invoice issued by the transaction management system 100.

The invoice information according to the present embodiment includes, for example, the items, "INVOICE NUMBER," "CUSTOMER ID," "CUSTOMER NAME," "BILLED AMOUNT," "PAYMENT DUE DATE," and "CREATION DATE." The items including "SENDING DATE," "PAYMENT STATUS," "PAYMENT DATE," "PAYMENT ACCOUNT," "CLEARING STATUS," and "IMPORT," "EXTERNAL INVOICE ID," and "FILE PATH," are information items for managing the invoice information. Accordingly, in the present embodiment, the invoice management information includes the invoice information.

The value of the item of "INVOICE NUMBER" is identification information for identifying an invoice. In other words, the value of the item of "INVOICE NUMBER" is identification information for identifying invoice management information corresponding to a record.

The value of the item of "CUSTOMER ID" is identification information for identifying a customer. Specifically, the value of the item of "customer ID" is a tenant ID of a tenant (buyer) serving as a destination (sending destination) of the invoice identified by the invoice number.

The value of the item of "CUSTOMER NAME" indicates a name of the buyer. The value of the item of "BILLED AMOUNT" indicates a billed amount, and the value of the item of "PAYMENT DUE DATE" indicates a payment due date of the billed amount. The value of the item of "DATE CREATED" indicates a date on which the invoice was created, and the value of the item or "SENDING DATE" indicates a date on which the seller sent the invoice to the buyer.

The value of the item of "PAYMENT STATUS" indicates whether the billed amount has been paid or not. For example, when the value of the item of "PAYMENT STATUS" is "UNPAID," the payment corresponding to the billed amount has not been processed, and when the value of the item of "PAYMENT STATUS" is "PAID," the payment corresponding to the billed amount has been successfully processed.

The value of the item of "PAYMENT DATE" indicates a date on which the payment was processed, and the value of the item of "PAYMENT ACCOUNT" indicates an account of payment destination.

The value of the item of "CLEARING STATUS," namely payment application status, indicates whether the billed amount that is confirmed to be paid is cleared or not. Specifically, when the value of the item of "CLEARING STATUS," or payment application status, is "UNAPPLIED," this indicates a status in which the payment has been confirmed but the billed amount has not been cleared. In addition, when the value of the item "CLEARING STATUS," or payment application status, is "APPLIED," this indicates a status in which the amount corresponding to the payment that is confirmed to be paid is deleted, or cleared, from the billed amount.

The value of the item of "IMPORT" indicates whether the invoice information identified by the invoice number is invoice information of an invoice created using the external system 500 or not. Specifically, when the value of the item of "IMPORT" is "NO," the invoice information is invoice information created by the transaction management system 100. When the value of the item of "IMPORT" is "YES," the invoice information is invoice information created by the external system 500.

The value of the item of "EXTERNAL INVOICE ID" is invoice identification information for identifying an invoice issued by the external system 500. The value of the item of "FILE PATH" indicates a storage destination of invoice image data of an invoice identified by the invoice number.

In the example of FIG. 5, the value of the item of "IMPORT" of each of the invoice numbers 1056 and 1057 is Yes, and the invoice management information identified by each of the invoice numbers 1056 and 1057 includes the invoice information created by the external system 500.

In addition, in the invoice management database 230, the invoice information having the invoice number 1056 and the invoice information having the invoice number 1057 are invoice information included in an invoice identified by the invoice ID "Invoice01234" and invoice information included in an invoice identified by the invoice ID "Invoice01235," respectively, in the external system 500.

The invoice image data of each of the invoice numbers 1056 and 1057 is stored in a storage location indicated by the corresponding file path. As described above, in the present embodiment, the invoice information and the invoice image data are associated with each other and stored (registered) in the invoice management database 230.

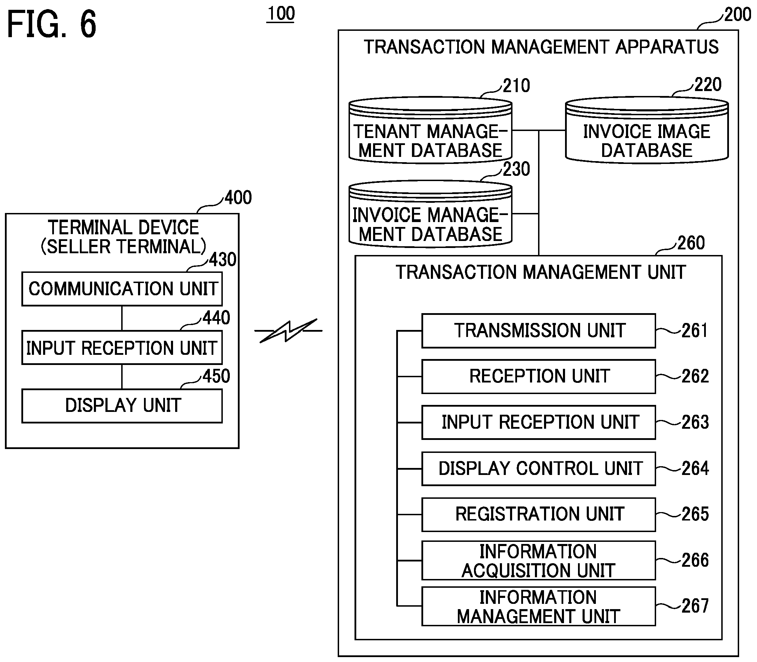

A description is given below of a functional configuration of each apparatus included in the transaction management system 100, with reference to FIG. 6. FIG. 6 is a block diagram illustrating the functional configuration of each apparatus included in the transaction management system 100 according to the first embodiment.

Functions, or functional units, of the transaction management apparatus 200 are described below. The transaction management unit 260 of the transaction management apparatus 200 according to the present embodiment includes a transmission unit 261, a reception unit 262, an input reception unit 263, a display control unit 264, a registration unit 265, an information acquisition unit 266, and an information management unit 267. The functional units of the transaction management apparatus 200 may be implemented by or may be caused to function by operation of any of the components illustrated in FIG. 2 according to an instruction from the CPU 201 according to a program loaded from the HD 204 to the RAM 203, for example.

The transmission unit 261 and the reception unit 262 transmit and receive information between the transaction management apparatus 200 and another apparatus.

Specifically, the transmission unit 261 transmits the invoice image data stored in the invoice image database 220 to the e-mail service 700 or the print service 800 as the transmission destination.

The reception unit 262 receives the invoice image data and the invoice information created by the external system 500 from the seller terminal 400.

The input reception unit 263 receives various inputs performed with respect to the transaction management apparatus 200. Specifically, the input reception unit 263 receives input of various kinds of information and requests from the seller terminal 400, the accounting system 600, and the buyer terminal 300, for example. The various kinds of information include, for example, form image data (invoice image data), form information (invoice information), and a payment completion notification.

The display control unit 264 controls display on the seller terminal 400. The registration unit 265 registers, in the transaction management system 100, the invoice image data of the invoice created by the external system 500 and the invoice information. Specifically, when the invoice image data and the invoice information are imported from the seller terminal 400, the registration unit 265 stores, in the invoice management database 230, the invoice image data and the invoice information in association with each other.

The information acquisition unit 266 acquires various kinds of information. Specifically, the information acquisition unit 266 acquires information transmitted from the seller terminal 400. The information acquisition unit 266 acquires various kinds of information stored in the invoice management database 230.

The information management unit 267 manages the invoice image data and the invoice management information. Specifically, the information management unit 267 updates the invoice management database 230.

Functions, or functional units, of the seller terminal 400 are described below. The seller terminal 400 according to the present embodiment includes a communication unit 430, an input reception unit 440, and a display unit 450. The functional units of the seller terminal 400 may be implemented by or may be caused to function by operation of any of the components illustrated in FIG. 3 according to an instruction from the CPU 401 according to a program loaded from the EEPROM 404 to the RAM 403, for example. The communication unit 430 transmits and receives information between the seller terminal 400 and another apparatus. Specifically, for example, the communication unit 430 performs communication between the seller terminal 400 and the external system 500 and communication between the seller terminal 400 and the transaction management apparatus 200.

The input reception unit 440 receives input of various kinds of information to the seller terminal 400. The display unit 450 displays information on the display of the seller terminal 400.

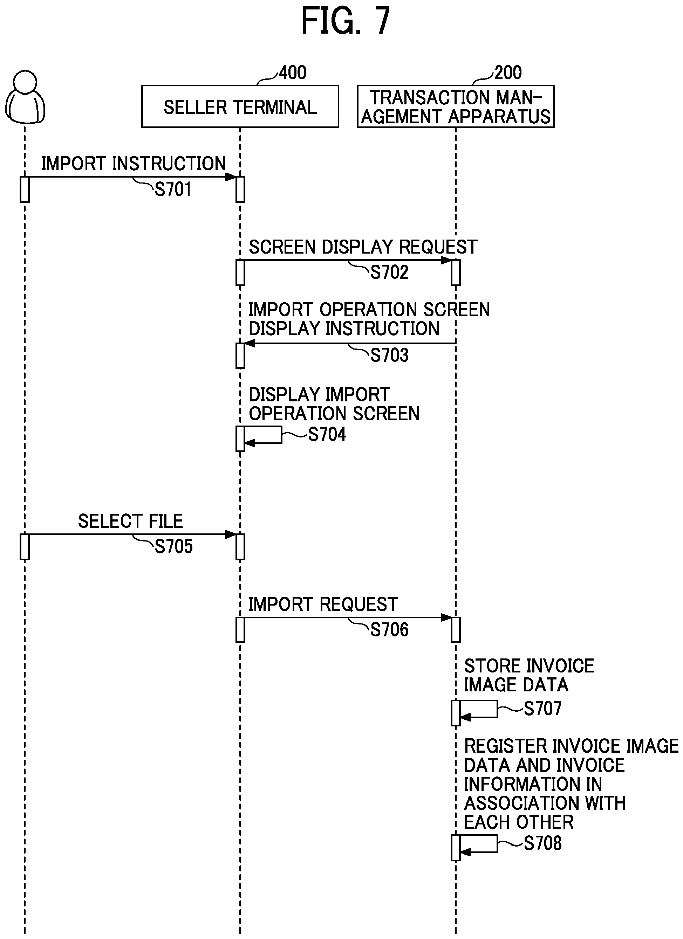

A description is given below of a process performed by the transaction management system 100 according to the present embodiment, with reference to FIG. 7. FIG. 7 is a sequence diagram illustrating a process performed by the transaction management system 100 according to the first embodiment of the present disclosure. FIG. 7 illustrates an operation of registering, with the transaction management apparatus 200, the invoice image data and the invoice information of the invoice created by the external system 500.

In the transaction management system 100 according to the present embodiment, the seller terminal 400 receives an import instruction for importing the invoice image data and the invoice information created by the external system 500, from a tenant such as a seller (step S701).

At this time, the seller terminal 400 holds the invoice image data and the invoice information of the invoice created in advance by the external system 500.

Subsequently, in response to receiving the import instruction, the seller terminal 400 transmits a display request for displaying a screen for performing an operation for import to the transaction management apparatus 200 (step S702).

The transaction management apparatus 200 receives the display request and transmits a display instruction for displaying an import operation screen (an example of a reception screen) to the seller terminal 400 (step S703).

In response to the display instruction, the seller terminal 400 causes the display unit 450 to display the import operation screen (step S704).

Next, the seller terminal 400 receives, on the import operation screen, selection of the invoice image data and the invoice information to be imported (step S705).

Note that the invoice image data of the invoice created by the external system 500 may be, for example, image data in a portable document format (PDF). In the following description, the invoice image data created by the external system 500 may be referred to as a PDF file.

Alternatively, the invoice information of the invoice created by the external system 500 may be, for example, data in a comma-separated values (CSV) format. In the following description, the invoice information of the invoice created by the external system 500 may be referred to as a CSV file. The CSV file may include the invoice information corresponding to a plurality of invoices.

When the PDF file and the CSV file are selected, the seller terminal 400 transmits an import request for importing the selected two files to the transaction management apparatus 200 (step S706). At this time, the selected PDF file and CSV file are also transmitted to the transaction management apparatus 200.

In response to receiving input of the PDF file and the CSV file by the input reception unit 263, the transaction managing apparatus 200 acquires the two files by the information acquisition unit 266 and stores the PDF file in the invoice image database 220 by the registration unit 265 (step S707).

In other words, the transaction management apparatus 200 receives an operation for import from the seller terminal 400 by the input reception unit 263.

Subsequently, the transaction management apparatus 200 causes the registration unit 265 to register the CSV file in the invoice management database 230 in association with the PDF file (step S708).

In other words, the transaction management apparatus 200 stores, by the registration unit 265, the invoice image data of the invoice created by the external system 500 and the invoice information in association with each other in the invoice management database 230 of the transaction management system 100.

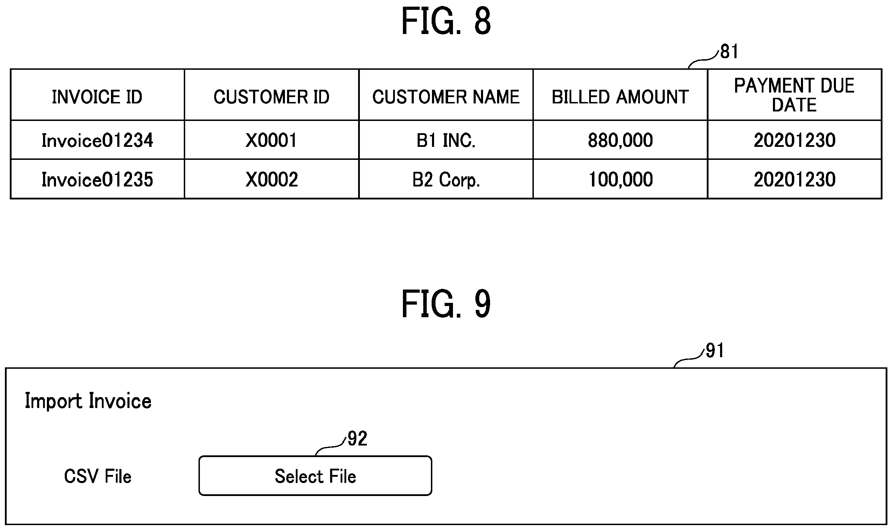

The operation illustrated in FIG. 7 is further described below. FIG. 8 is a diagram illustrating an example of the CSV file.

In the example of FIG. 8, a CSV file 81 includes the invoice information of the invoice of which the invoice ID assigned by the external system 500 is "Invoice01234" and the invoice information of the invoice of which the invoice ID is "Invoice01235."

A description is given below of display examples of the seller terminal 400 with reference to FIGS. 9 to 12. FIG. 9 is a diagram illustrating a first display example of the seller terminal 400 according to the first embodiment. A screen 91 illustrated in FIG. 9 is an example of the import operation screen displayed on the seller terminal 400 in step S704 of FIG. 7.

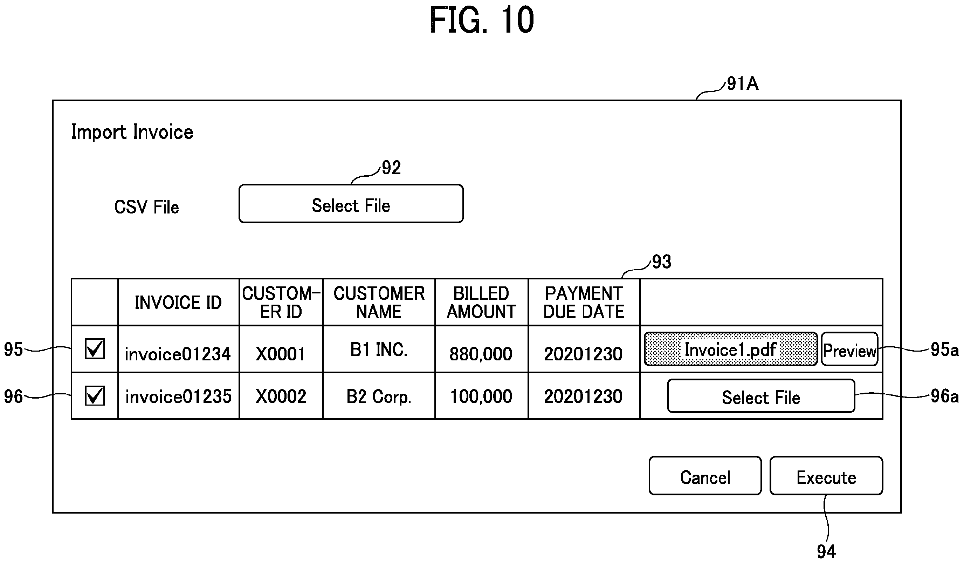

The screen 91 includes a selection field 92. In the present embodiment, when the selection field 92 is selected, a list of CSV files held by the seller terminal 400 may be displayed. The seller terminal 400 sets the CSV file selected in the list as a CSV file to be imported. When the CSV file is selected, the screen 91 transitions to a screen 91A illustrated in FIG. 10. In the present embodiment, it is assumed that the CSV file 81 is selected.

FIG. 10 is a diagram illustrating a second display example of the seller terminal 400 according to the first embodiment. A screen 91A illustrated in FIG. 10 includes the selection field 92, a display area 93, and an operation button 94.

The display area 93 displays the invoice information 95 and 96 included in the CSV file 81 selected in the selection field 92. In the display area 93, "invoice1.pdf" is being selected as a corresponding PDF file for the invoice information 95, and a PDF file is to be selected for the invoice information 96.

In the display area 93, an operation button 95a is displayed in association with the invoice information 95. The operation button 95a is an operation button for displaying a preview image of a PDF file associated with the invoice information 95. In response to receiving an operation on the operation button 95a, the seller terminal 400 may transition from the screen 91A to a display screen of a preview image corresponding to the invoice1.pdf.

The operation button 96a is displayed in association with the invoice information 96. The operation button 96a is an operation button for displaying a list of PDF files. When the operation button 96a is operated in the display area 93, a list of PDF files may be displayed on the screen 91A.

The operation button 94 is an operation button for transmitting an import request of the selected CSV file and PDF file to the transaction management apparatus 200. When the operation button 94 is operated, the seller terminal 400 transmits the selected CSV file and PDF file to the transaction management apparatus 200.

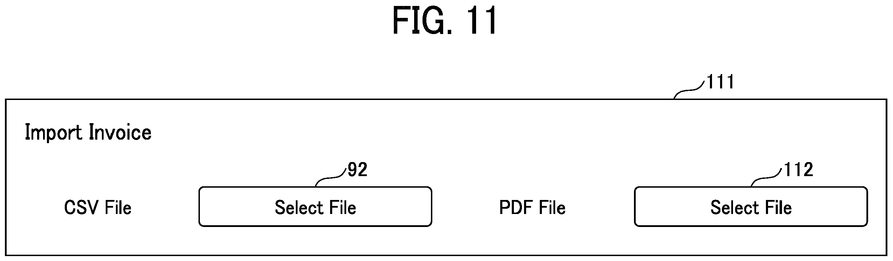

FIG. 11 is a diagram illustrating a third display example of the seller terminal 400 according to the first embodiment. A screen 111 illustrated in FIG. 11 is another example of the import operation screen displayed on the seller terminal 400 in step S704 of FIG. 7.

The screen 111 includes selection fields 92 and 112. In the present embodiment, when the selection field 112 is selected, a list of PDF files held by the seller terminal 400 may be displayed. In other words, on the screen 111, selection is made for each of the CSV file and the PDF file is selected.

When the CSV file and the PDF file are selected, the screen 111 transitions to a screen 111A.

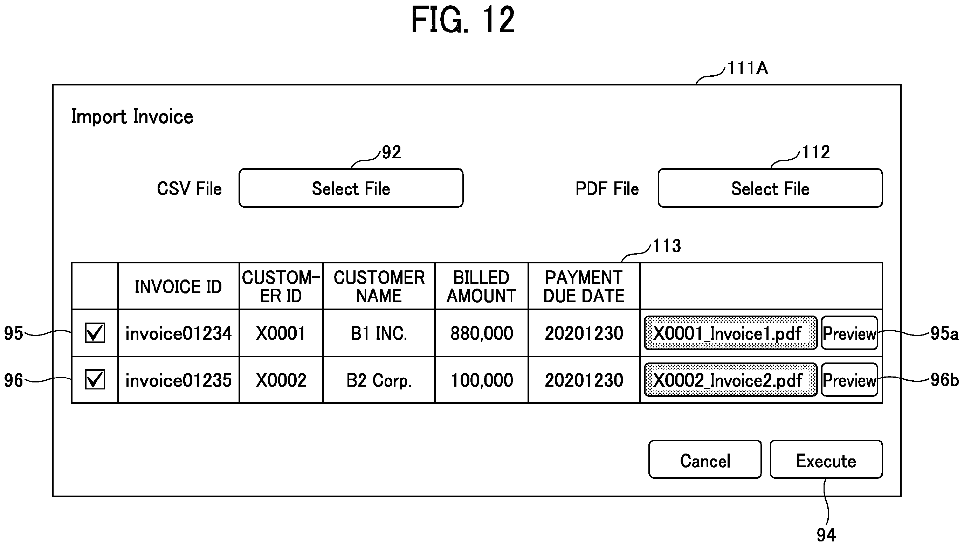

FIG. 12 is a diagram illustrating a fourth display example of the seller terminal 400 according to the first embodiment. The screen 111A illustrated in FIG. 12 includes selection fields 92 and 112, a display area 113, and the operation button 94.

Each of the invoice information 95 and 96 is displayed in the display area 113. In addition, in the display area 113, each of the invoice information 95 and 96 is automatically associated with the PDF file selected in the selection field 112, and the PDF file name is displayed.

In FIG. 12, when the PDF file is selected, the seller terminal 400 may execute character recognition processing on the selected PDF file and extract information such as the invoice ID and the customer ID included in the invoice image. Then, the seller terminal 400 may identify the invoice information included in the CSV file from the extracted information and display the PDF file and the CSV file in association with each other.

In this way, when importing a large amount of invoice information, time and work taken by operations of selecting the PDF files corresponding to the invoice information one by one are reduced.

The operation button 95a and the operation button 96b displayed in the display area 113 are operation buttons for displaying a preview image of the PDF file associated with the invoice information.

Next, management of payment by the transaction management apparatus 200 according to the present embodiment is described.

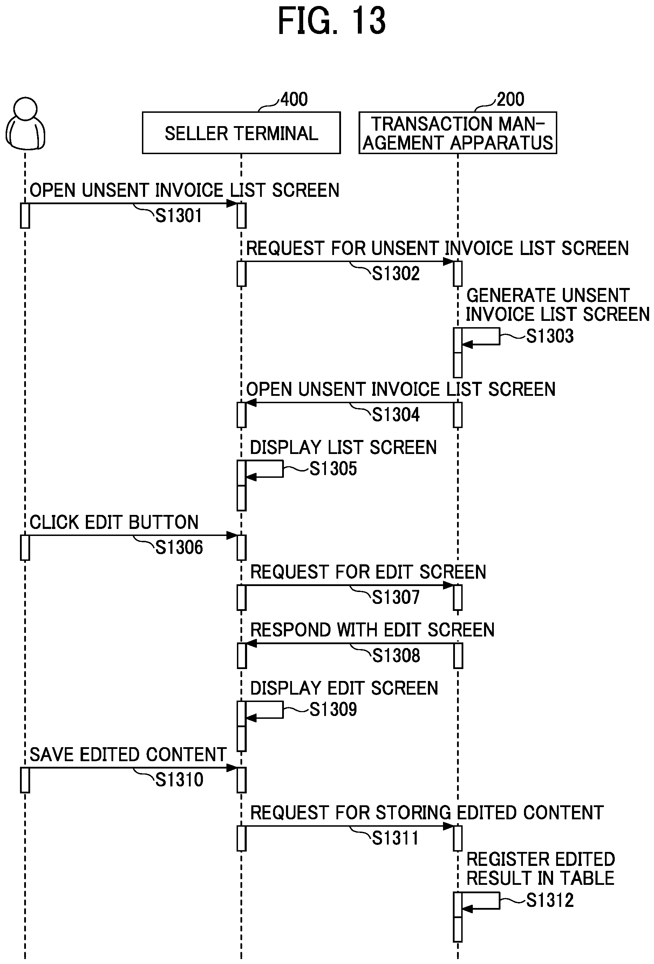

FIG. 13 is a sequence diagram illustrating a process performed by the transaction management system 100 according to the first embodiment. FIG. 13 illustrates an operation of the transaction management system 100 for displaying a list of invoices that have not been sent to the buyer among the invoices issued by the seller.

In the transaction management system 100 according to the present embodiment, when receiving a display instruction for displaying a screen of a list of unsent invoice information (step S1301), the seller terminal 400 transmits a display request for displaying a screen of the list to the transaction management apparatus 200 (step S1302). In the description of embodiments, the screen of a list of unsent invoice information may be referred to as a list screen or an unsent invoice list screen. The display request may include a tenant ID for identifying the seller.

In response to receiving the display request, the transaction management apparatus 200 causes the display control unit 264 to generate screen data for displaying a list of unsent invoices (step S1303), and transmits a display instruction for displaying a screen of the list to the seller terminal 400 (step S1304). In the description of embodiments, the screen of a list of invoices may be referred to as an unsent invoice list screen, or a list screen. Details of the processing in step S1303 are described later.

In response to receiving the display instruction for displaying the list screen, the seller terminal 400 causes the display unit 450 to display the unsent invoice list screen on the display (step S1305).

In the present embodiment, the invoice information created by the external system 500 and registered in the transaction management system 100 is prohibited from being edited. In the present embodiment, the invoice information created by the transaction management system 100 is permitted to be edited.

The following processing after step S1306 is an operation to be performed in a case that editing is performed with respect to the invoice information that is permitted to be edited.

When receiving an operation for instructing to edit the invoice information permitted to be edited on the list screen of the unsent invoices (step S1306), the seller terminal 400 transmits a display request for displaying an edit screen to the transaction management apparatus 200 (step S1307).

In response to receiving the display request, the transaction management apparatus 200 causes the display control unit 264 to transmit a display instruction for displaying the edit screen to the seller terminal 400 (step S1308).

In response to receiving the display instruction, the seller terminal 400 causes the display unit 450 to display the edit screen on the display (step S1309).

In response to receiving an editing operation and the operation for instructing to save the edited content (step S1310), the seller terminal 400 transmits a request for storing the edited content to the transaction management apparatus 200 (step S1311).

In response to receiving the request for storing the edited content, the transaction management apparatus 200 registers, by the information management unit 267, the edited content in the invoice management database 230 (step S1312).

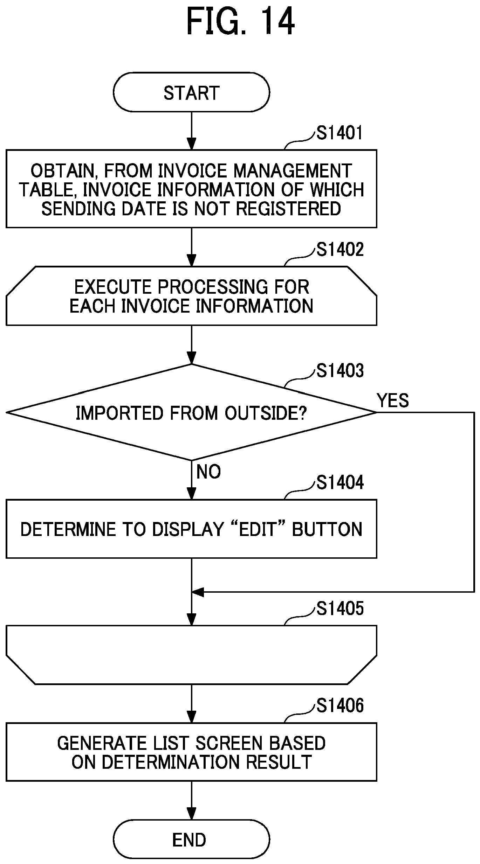

Next, a process for generating the unsent invoice list screen is described with reference to FIG. 14. FIG. 14 is a flowchart illustrating a process performed by the transaction management apparatus 200 according to the first embodiment. FIG. 14 illustrates details of the processing of step S1303 in FIG. 13.

The information acquisition unit 266 of the transaction management apparatus 200 refers to the invoice management database 230 and acquires the invoice information in which a value of the item of "SENDING DATE" has not been input (step S1401).

Subsequently, the transaction management apparatus 200 executes the processing up to step S1405 for the acquired invoice information (step S1402).

The information management unit 267 of the transaction management apparatus 200 refers to the invoice management information including the acquired invoice information and determines whether the acquired invoice information is imported from the outside or not (step S1403). Specifically, the information management unit 267 refers to the invoice management information including the acquired invoice information and determines whether the value of the item of "IMPORT" is "YES" or not.

In step S1403, when the invoice information is imported from the outside, the process performed by the transaction management apparatus 200 proceeds to step S1405, which is described later.

In Step S1403, when the invoice information is not imported from the outside, in other words, when the acquired invoice information is invoice information created by the transaction management system 100, the information acquisition unit 266 determines that the invoice information is invoice information that is permitted to be edited (Step S1404). In other words, for the invoice information that is permitted to be edited, the information acquisition unit 266 determines to display an operation button for transitioning to the edit screen for editing invoice information.

When the transaction management apparatus 200 performs the processing of steps S1401 and S1404 on all the invoice information acquired in step S1403 (step S1405), the process proceeds to step S1406.

The transaction management apparatus 200 generates screen data for displaying an unsent invoice list screen including information on a determination result indicating whether editing of the invoice information is permitted or not (step S1406), and the process ends.

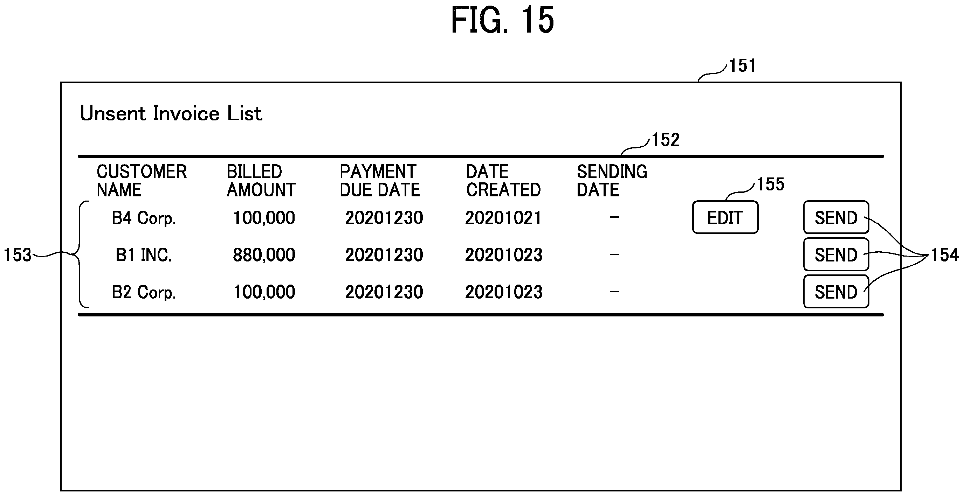

A description of the unsent invoice list screen is given below with reference to FIG. 15. FIG. 15 is a diagram illustrating a fifth display example of the seller terminal 400 according to the first embodiment.

A screen 151 illustrated in FIG. 15 is an example of an unsent invoice list screen displayed on the seller terminal 400 in step S1305 of FIG. 13.

The screen 151 includes a display area 152. A list 153 of the invoice information acquired in step S1401 of FIG. 14 is displayed in the display area 152.

In the display area 152, operation buttons 154 each associated with corresponding invoice information and an operation button 155 associated with a part of the invoice information displayed in the display area 152 are displayed.

The operation button 154 is an operation button for receiving an operation for instructing the seller terminal 400 to send the invoice including corresponding invoice information to the buyer. The seller terminal 400 may transmit an invoice sending request to the transaction management apparatus 200 upon receiving the transmission instruction. In addition, in the present embodiment, when the operation button 154 is operated on the screen 151, the screen 151 transitions to a transmission setting screen, which is described later.

In this case, the transaction management apparatus 200 may send the invoice in accordance with an invoice sending method. Specifically, for example, when the invoice sending method is Ship by E-Mail, the invoice information instructed to be sent may be transmitted to the e-mail service 700.

Alternatively, for example, in a case where the invoice sending method is Mail by Paper, the invoice information instructed to be sent may be transmitted to the print service 800.

The operation button 155 is displayed for the invoice information that is permitted to be edited, but not for the other invoice information. In the example of FIG. 15, the operation button 155 is displayed with respect to the invoice information having a customer name of B4 Corporation (B4 Corp.), and the operation button 155 is not displayed with respect to the invoice information having a customer name of B1 INC. and the invoice information having a customer name of B2 Corporation (B2 Corp.).

Accordingly, among the invoice information displayed on the screen 151, the invoice information having a customer name of B4 Corporation (B4 Corp.) is the invoice information created by the transaction management system 100, and the other invoice information is created by the external system 500.

In the present embodiment, when the operation button 155 is operated on the screen 151, the screen 151 transitions to the edit screen for editing invoice information.

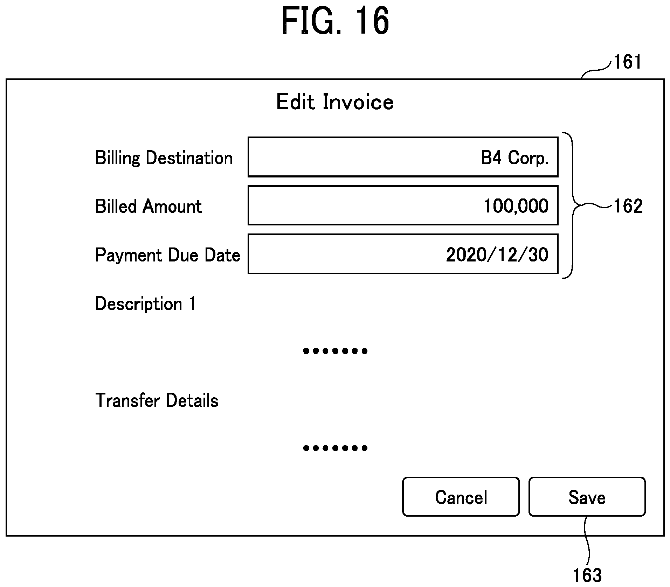

FIG. 16 is a diagram illustrating a sixth display example of the seller terminal 400 according to the first embodiment. A screen 161 illustrated in FIG. 16 is an example of the edit screen for invoice information displayed on the seller terminal 400 in step S1309 of FIG. 13.

The screen 161 includes a display field 162 and an operation button 163. In the display field 162, an item name and an item value included in the invoice information that is permitted to be edited are displayed in association with each other. In the display field 162, inputting an item value corresponding to each item name again is accepted.

The operation button 163 is an operation button for storing the item value displayed in the display field 162 in the invoice management database 230.

When the operation button 163 is operated on the screen 161, the transaction management apparatus 200 stores the item value input to the display field 162 in the invoice management database 230.

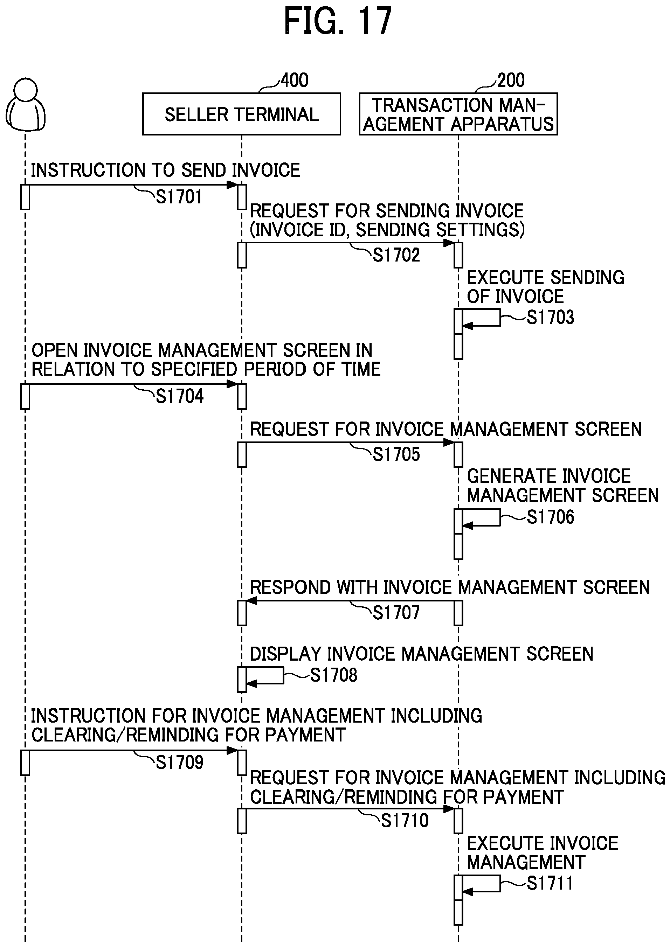

Next, a process of sending an invoice and managing a payment after sending the invoice, performed by the transaction management system 100 is described with reference to FIG. 17. FIG. 17 is a sequence diagram illustrating an operation of the transaction management system 100 according to the first embodiment.

In the following description with reference to FIG. 17, the processing from step S1701 to step S1703 is related to the processing of sending an unsent invoice to the buyer, and the processing from step S1704 to step S1711 is related to the processing of managing a payment status after sending the invoice.

In the present embodiment, the process of sending the invoice to the buyer and the process of managing the payment status may not be executed continuously, but may be executed at different and independent timings.

The seller terminal 400 receives an instruction to send an invoice (step S1701). Specifically, the seller terminal 400 receives an operation of selecting one of the operation buttons 154 on the screen 151 of FIG. 15.

Subsequently, the seller terminal 400 transmits an invoice sending request to the transaction management apparatus 200 (step S1702). The invoice sending request includes an invoice number and sending-settings information, for example. The sending-settings information is information including information on an invoice sending method.

In response to receiving the transmission request, the transaction management apparatus 200 transmits, by the information management unit 267, the invoice (step S1703). Details of the processing in step S1703 are described later.

In addition, in response to receiving the display instruction for displaying an invoice management screen for a period of time that is specified (step S1704), the seller terminal 400 transmits a display request for displaying the invoice management screen to the transaction management apparatus 200 (step S1705). The display request may include information for specifying the period of time.

In response to receiving the display request for displaying the invoice management screen, the transaction management apparatus 200 causes the display control unit 264 to generate screen data for displaying the invoice management screen (step S1706). Details of step S1706 are described later.

Subsequently, the transaction management apparatus 200 transmits a display instruction for displaying the invoice management screen to the seller terminal 400 (step S1707).

In response to receiving the display instruction, the seller terminal 400 causes the display unit 450 to display the invoice management screen on the display (step S1708).

Subsequently, in response to receiving an operation for instructing in relation to the invoice management such as reminding, or prompting, for payment (step S1709), the seller terminal 400 transmits an invoice management request to the transaction management apparatus 200 (step S1710).

The transaction management apparatus 200 receives the invoice management request and manages the invoice information by the information management unit 267 (step S1711). Details of the processing in step S1711 are described later.

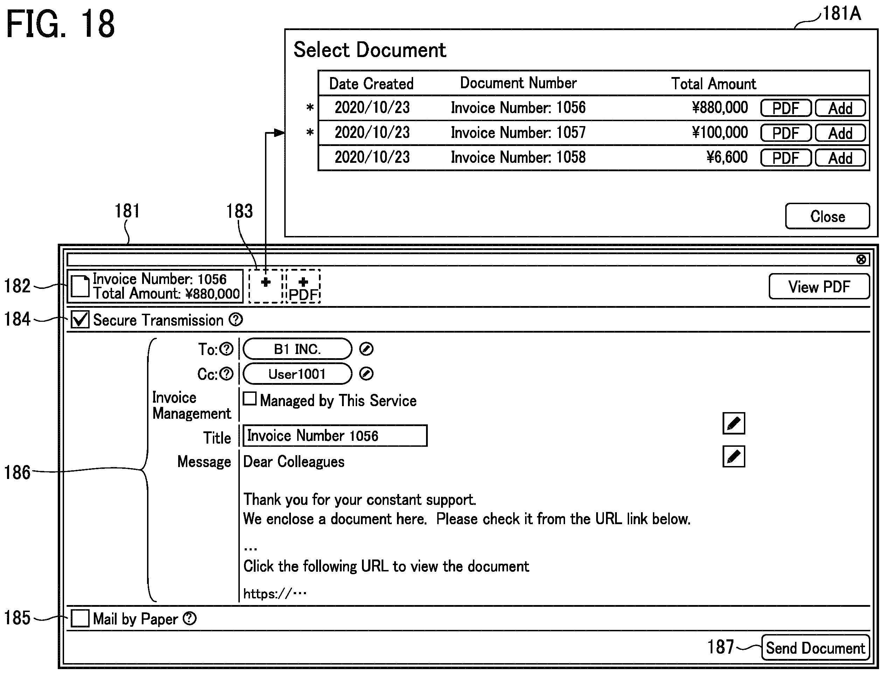

Next, with reference to FIG. 18, a description is given of a sending setting screen for configuring sending settings for sending an invoice. FIG. 18 is a diagram illustrating a seventh display example of the seller terminal 400 according to the first embodiment. A screen 181 illustrated in FIG. 18 is an example of a sending setting screen for configuring the settings related to sending of an invoice. The screen 181 is displayed on the seller terminal 400 when the tenant instructs to send an invoice, for example, in step S1701 of FIG. 17.

The screen 181 includes display fields 182 and 183, selection fields 184 and 185, an input field 186, and an operation button 187.

The display field 182 displays an invoice number for identifying an invoice to be sent. In the display field 182, a billed amount in the invoice identified by the invoice number may be displayed.

The display field 183 displays an icon image for displaying a list of unsent invoices. In the present embodiment, when the icon image in the display field 183 is selected, a window 181A may be displayed on the screen 181. The window 181A displays the list of unsent invoices. In the present embodiment, the invoice number of the invoice selected from the list displayed in the window 181A may be displayed in the display field 182.

The selection fields 184 and 185 are selection fields for selecting an invoice sending method. Specifically, the selection field 184 is a selection field for selecting a method of sending an invoice, Ship by E-Mail, and the selection field 185 is a selection field for selecting a method of sending an invoice, Mail by Paper.

In the example of FIG. 18, since the invoice number "1056" is displayed in the display field 182 and the selection field 184 is selected, the invoice information and the invoice image data identified by the invoice number "1056" are set to be sent by e-mail.

In the input field 186, for example, information on a sending destination of the invoice is input. On the screen 181, information including a name of the customer to whom the invoice of the invoice number "1056" is to be sent is input.

The operation button 187 is an operation button for instructing execution of sending the invoice. When the operation button 187 is operated, the seller terminal 400 transmits an invoice sending request to the transaction management apparatus 200.

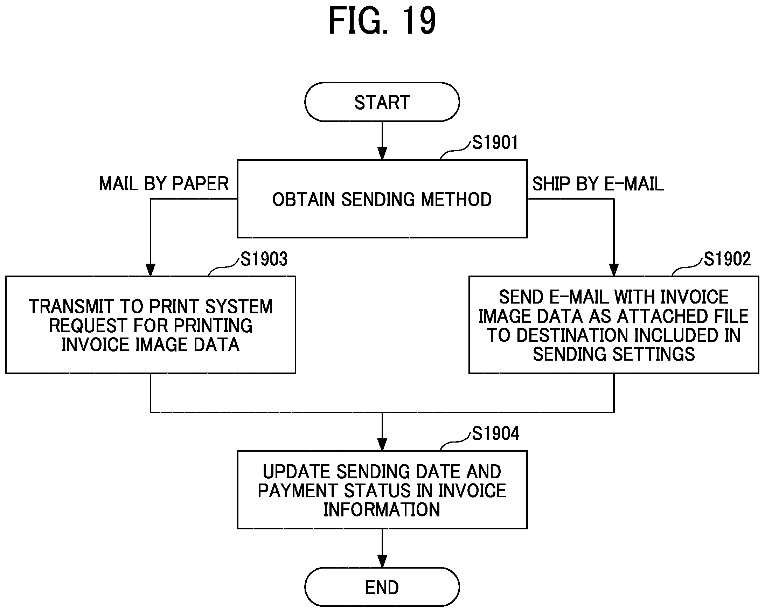

Next, a process of sending an invoice by the transaction management apparatus 200 is described with reference to FIG. 19. FIG. 19 is a flowchart illustrating a process performed by the transaction management apparatus 200 according to the first embodiment. The process of FIG. 19 illustrates details of the processing of step S1703 of FIG. 17.

The transaction management apparatus 200 acquires, by the information acquisition unit 266, information indicating a sending method from the sending-settings information (step S1901).

When the sending method is Ship by E-Mail, the transaction management apparatus 200 attaches the invoice image data to an e-mail, and transmits the e-mail to a sending destination included in the sending destination setting information (step S1902), by the information management unit 267, and the process proceeds to step S1904 described later.

When the sending method is Mail by Paper, the transaction management apparatus 200 transmits, by the information management unit 267, the invoice image data and a print request to the print service 800 (step S1903).

Subsequently, the transaction management apparatus 200 updates, by the information management unit 267, the sending date and the payment status in the invoice management information of the invoice management database 230 (step S1904), and the process ends.

Specifically, the information management unit 267 inputs a value for the item of "SENDING DATE" in the invoice management information including the invoice number of the sent invoice, and sets a value for the item of "PAYMENT STATUS" to "UNPAID." In the present embodiment, as described above, when the invoice is sent and the value of the item of "SENDING DATE" is input, the value of the item of "PAYMENT STATUS" is turned to unpaid. By doing so, the present embodiment can prevent the occurrence of a situation in which the buyer is reminded or urged to pay before the invoice is sent.

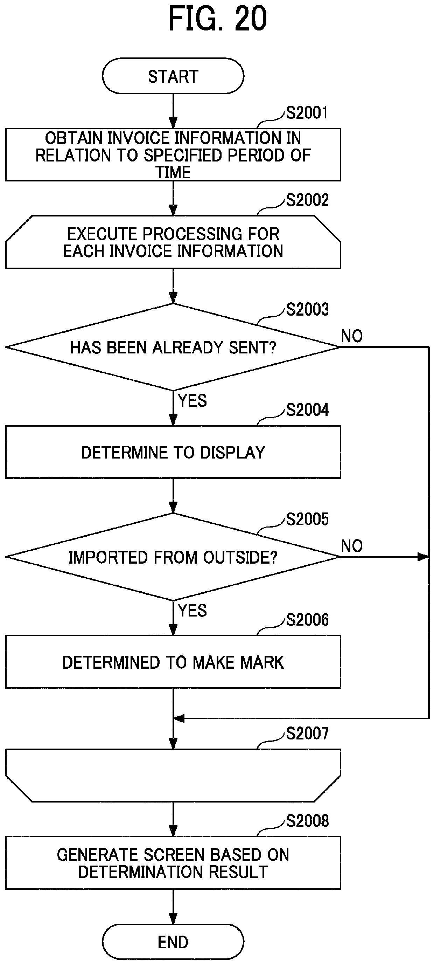

Next, a process of displaying the invoice management screen performed by the transaction management apparatus 200 according to the present embodiment is described with reference to FIG. 20. FIG. 20 is a flowchart illustrating a process performed by the transaction management apparatus 200 according to the first embodiment. The process of FIG. 20 illustrates details of the processing of step S1708 of FIG. 17.

In response to receiving an operation of specifying a period of time by the input reception unit 263, the transaction management apparatus 200 according to the present embodiment, acquires, by the information acquisition unit 266, the invoice information in relation to the specified period of time from the invoice management database 230 (step S2001). Specifically, the information acquisition unit 266 acquires the invoice information of which the payment due date is included in the specified period of time. In some embodiments, in alternative to the payment due date, another type of date may be included in the specified period of time.

Subsequently, the transaction management apparatus 200 performs the processing after step S2003 on all the acquired invoice information (step S2002).

The information management unit 267 of the transaction management apparatus 200 determines whether an invoice corresponding to the acquired invoice information has been sent or not (step S2003). Specifically, the information management unit 267 determines whether a value for the item of "SENDING DATE" corresponding to the invoice information is input or not in the invoice management database 230.

When the invoice has not been sent in step S2003, the transaction management apparatus 200 performs processing of step S2007, which is described later.

When the invoice has been sent in step S2003, the transaction management apparatus 200 sets the invoice information as one to be displayed (step S2004).

Subsequently, the transaction management apparatus 200 determines whether the invoice information to be displayed is created by the external system 500 or not (step S2005). Specifically, the transaction management apparatus 200 determines whether a value for the item of "IMPORT" corresponding to the invoice information set as the one to be displayed is "NO" in the invoice management database 230.

In step S2005, when the invoice information is not created by the external system 500, in other words, when the invoice information is created by the transaction management system 100, the transaction management apparatus 200 performs the processing of step S2007.

When the determination made in step S2005 indicates that the invoice information has been created by the external system 500, the transaction management apparatus 200 determines that the invoice information is to be marked (step S2006).

The transaction management apparatus 200 executes the processing from step S2001 to step S2003 on all the invoice information acquired in step S2006 (step S2007).

After step S2007, namely after the processing is performed for all the invoice information, the transaction management apparatus 200 causes the display control unit 264 to generate screen data for displaying the invoice management screen including the invoice information to be displayed (step S2008), and the process ends.

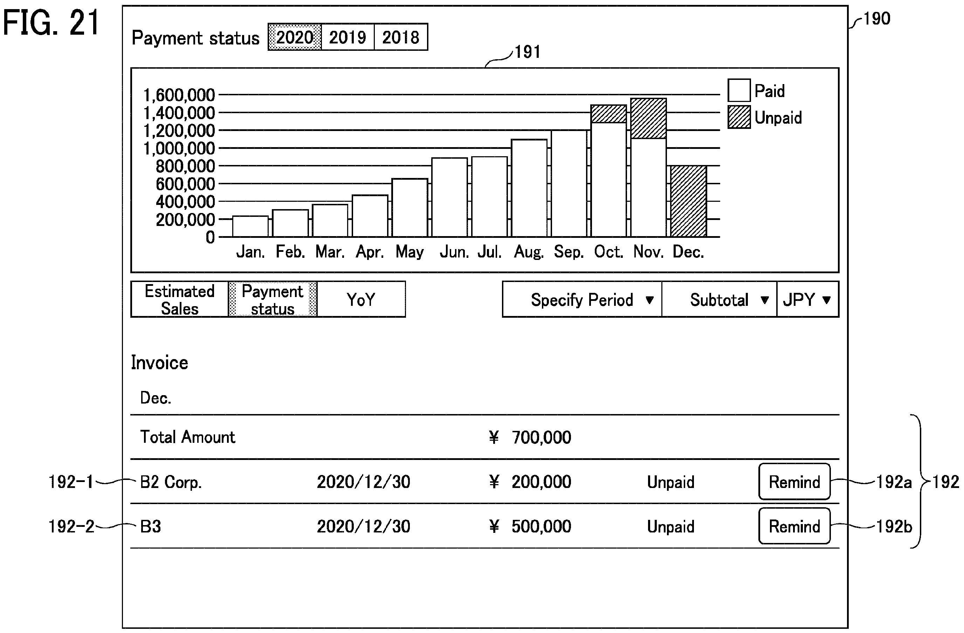

A description is given below of the invoice management screen displayed on the seller terminal 400 with reference to FIG. 21. FIG. 21 is a diagram illustrating an eighth display example of the seller terminal 400 according to the first embodiment.

A screen 190 illustrated in FIG. 21 is an example of the invoice management screen displayed in step S1708 of FIG. 17. In FIG. 21, among the invoices issued byA1 Inc., an invoice with an invoice number 1056 and another invoice with another invoice number 1057 are in unsent statuses (see FIG. 5).

The screen 190 includes display areas 191 and 192. In the display area 191, for example, the payment statuses in relation to a tenant name of "A1 Inc." are displayed.

In the display area 192, a list of the invoice information to be displayed is displayed. Specifically, invoice information 192-1 of an invoice issued to B2 Corporation (B2 Corp.) and invoice information 192-2 of an invoice issued to B3 are displayed in the display area 192.

In this case, the invoice number 1056 and the invoice number 1057 are not determined as ones to be displayed, because the invoices have not been sent yet. Accordingly, the invoice information of the invoice number 1056 and the invoice information of the invoice number 1057 are not displayed in the display area 192.

The display area 192 also includes operation buttons 192a and 192b displayed in association with the corresponding invoice information. The operation buttons 192a and 192b are operation buttons for reminding the sending destination to process for the payment of the corresponding invoice information.

The operation button 192a is associated with the invoice information 192-1, and the operation button 192b is associated with the invoice information 192-2.

When the operation button 192a is operated on the screen 190, the seller terminal 400 according to the present embodiment transmits, to the transaction management apparatus 200, a reminding request for reminding the sending destination corresponding to the invoice information 192-1 to process for the payment. In response to the reminding request, the transaction management apparatus 200 may transmit a notification to the buyer who is the sending destination of the invoice information 192-1 to remind the payment.

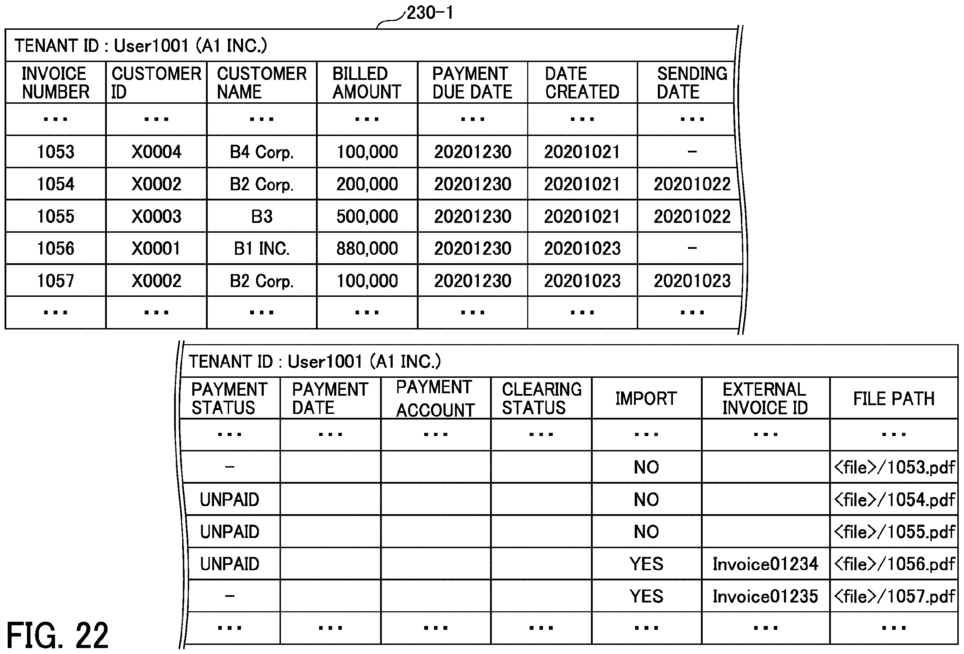

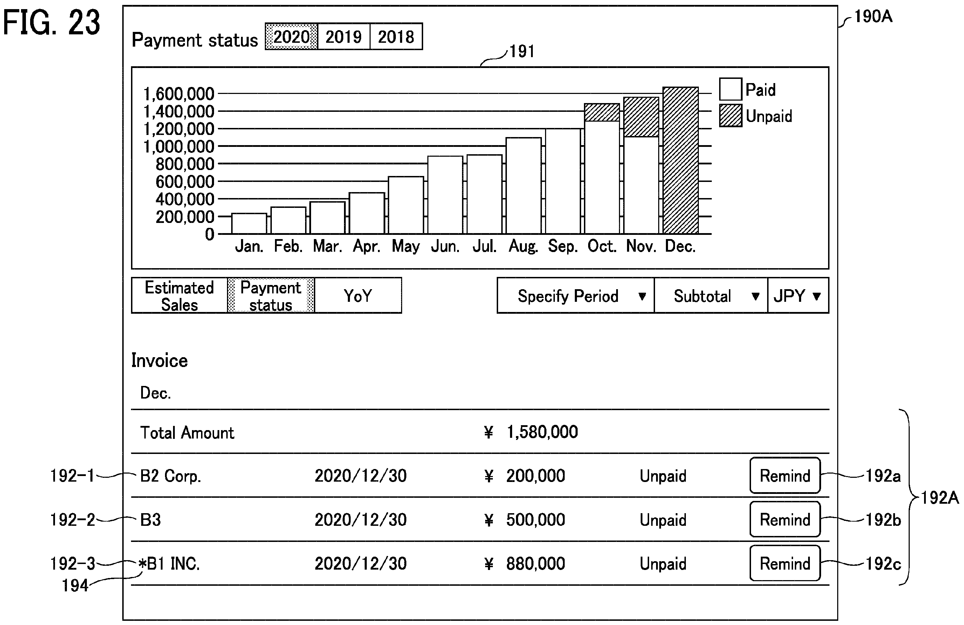

Next, with reference to FIGS. 22 and 23, a description is given of a case where the invoice identified by the invoice number 1056 has been sent.

FIG. 22 is a diagram illustrating another example of an invoice management database according to the first embodiment. In an invoice management database 230-1 illustrated in FIG. 22, in invoice management information having a value of "1056" for the item of "INVOICE NUMBER," the value of the item of "SENDING DATE" is input, and the value of the item of "PAYMENT STATUS" is "UNPAID." At this time, in the invoice management database 230-1, the value of the item of "CLEARING STATUS" is not input.

FIG. 23 is a diagram illustrating a ninth display example of the seller terminal 400 according to the first embodiment. The screen 190A illustrated in FIG. 23 is an example of the invoice management screen when a state of the invoice management database 230 becomes a state illustrated in FIG. 22.

In this case, the invoice information of the invoice number "1056" is to be displayed. In addition, in the invoice management database 230, the value of the item of "IMPORT" of the invoice management information corresponding to the invoice number "1056" is "YES."

Accordingly, the invoice information of the invoice number "1056" is one to which a mark indicating that the invoice information is created by the external system 500 is to be added.

The screen 190A includes display areas 191 and 192A. In the display area 192A, a list of the invoice information of which the invoices have been sent is displayed. Specifically, in the display area 192A, each of invoice information 192-1, 192-2, and 192-3 is displayed, and operation buttons 192a, 192b, and 192c are displayed for the corresponding invoice information. All the values of the item of "PAYMENT STATUS" corresponding to the invoice information displayed are "Unpaid."

Compared with the display area 192 of FIG. 21, the invoice information 192-3 is added to the display area 192A, and this indicates that the invoice information of the invoice number "1056" has been sent.

Since the invoice information of the invoice number "1056" is the invoice information imported from the external system 500, a mark 194 is displayed.

In the present embodiment, the invoice information imported from the external system 500 and the invoice information created by the transaction management system 100 are displayed in different display modes so that the invoice information imported from the external system 500 and the invoice information created by the transaction management system 100 can be visually distinguished from each other.

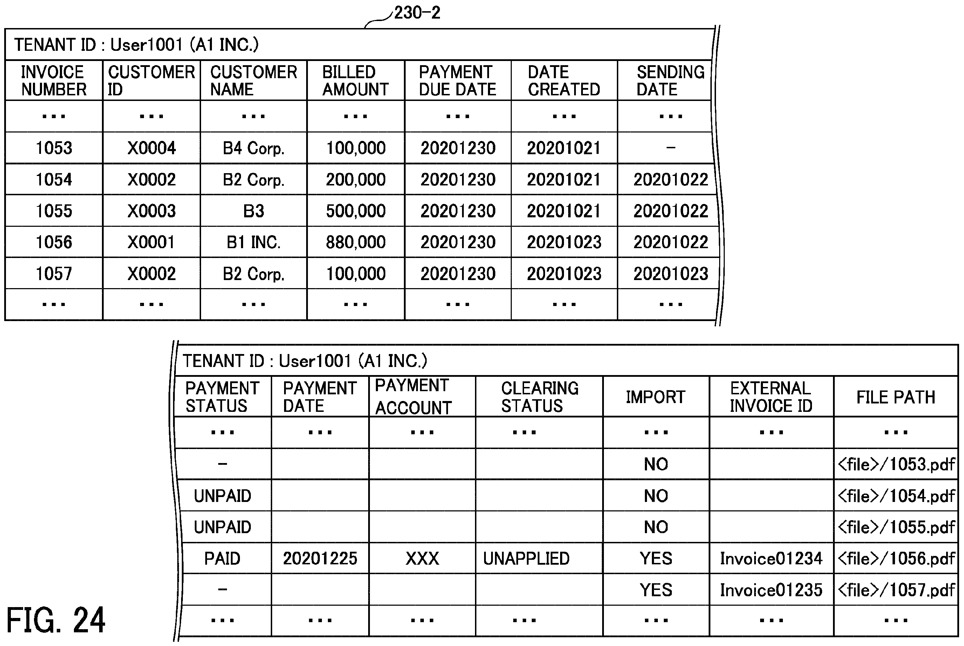

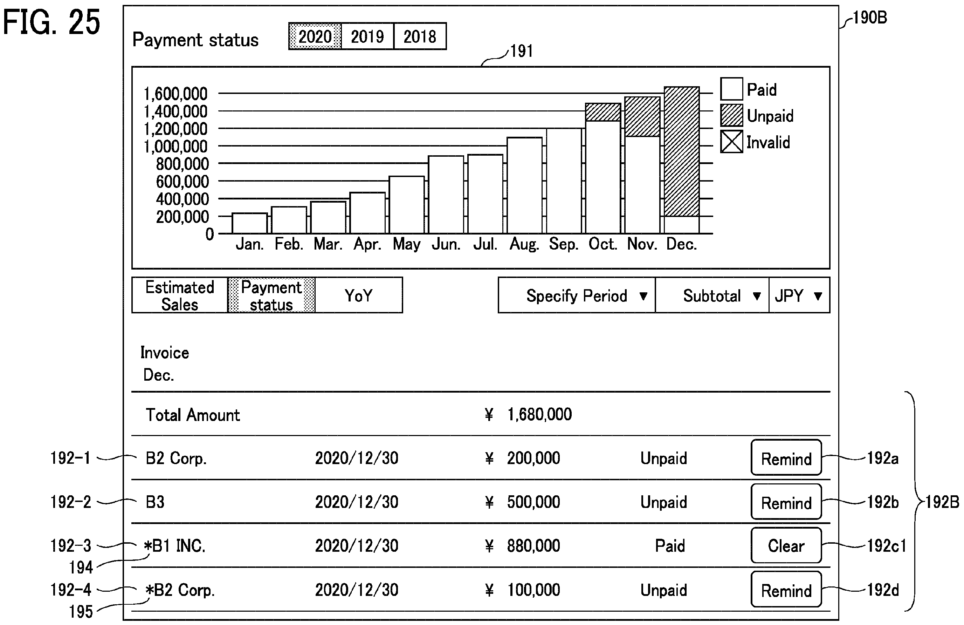

Next, with reference to FIGS. 24 and 25, a description is given of a case where a payment is made in accordance with the invoice identified by the invoice number 1056.

FIG. 24 is a diagram illustrating still another example of an invoice management database according to the first embodiment. In the invoice management database 230-2 illustrated in FIG. 24, in the invoice management information having the value of "1056" for the item of "INVOICE NUMBER," a value of the item of "PAYMENT STATUS" is "PAID."

In the invoice management database 230-2, in the invoice management information having the value of "1056" for the item of "INVOICE NUMBER," a value of the item of "CLEARING STATUS" is input, and the value is "UNAPPLIED."

FIG. 25 is a diagram illustrating a tenth display example of the seller terminal 400 according to the first embodiment. The screen 190B illustrated in FIG. 25 is an example of the invoice management screen when a state of the invoice management database 230 becomes a state illustrated in FIG. 24.

The screen 190B includes display areas 191 and 192B. In the display area 192B, a list of the invoice information to be displayed is displayed. In other words, in the display area 192B, the list of the invoice information that has been sent is displayed.

Specifically, in the display area 192B, each of invoice information 192-1, 192-2, and 192-3, and 192-4 is displayed, and operation buttons 192a, 192b, and 192c1, and 192d are displayed for the corresponding invoice information.

Compared with the display area 192A of FIG. 23, the invoice information 192-4 is added to the display area 192B, and this indicates that the invoice information of the invoice number "1057" has been sent. Since the invoice information 192-4 of the invoice number "1057" is the invoice information imported from the external system 500, a mark 195 is displayed.

In addition, in the display area 192B, the payment status corresponding to the invoice information 192-3 is "Paid," and this indicates that the payment corresponding to the invoice information 193-3 is performed.

In addition, an operation button 192c1 is displayed in association with the invoice information 192-3. The operation button 192c1 is an operation button for clearing, or deleting, the invoice information 192-3.

As described above, on the invoice management screen according to the present embodiment, when a payment corresponding to the invoice information is made, an operation button for clearing, or deleting, the invoice information is displayed. Accordingly, according to the present embodiment allows the seller to visually recognize the statues of the invoice information.

In the present embodiment, the invoice information imported from the external system 500 can be managed in the same manner as the invoice information created by the transaction management system 100.

Specifically, in the present embodiment, management relating to sending an invoice created by the external system 500 and management of payment with respect to the invoice can be performed in the same manner as management of an invoice created by the transaction management system 100.

Accordingly, in the present embodiment, even an invoice created by a sales system or the like independently used by a tenant as a seller can be managed by importing the invoice image data and the invoice information into the transaction management apparatus 200.

In addition, for example, even when the seller uses a plurality of sales management systems, invoices can be collectively managed by importing the invoice image data and the invoice information into the transaction management apparatus 200, resulting in reducing the load of management work.

### Second Embodiment:

A second embodiment is described below with reference to the drawings. The second embodiment is different from the first embodiment in that a file name of invoice image data stored in the transaction management apparatus 200 is defined. Therefore, in the following description of the second embodiment, differences from the first embodiment are described. In the following description of the second embodiment, the same reference numerals are given to the same or corresponding functions or configurations as those of the first embodiment, and redundant descriptions thereof are omitted or simplified appropriately.

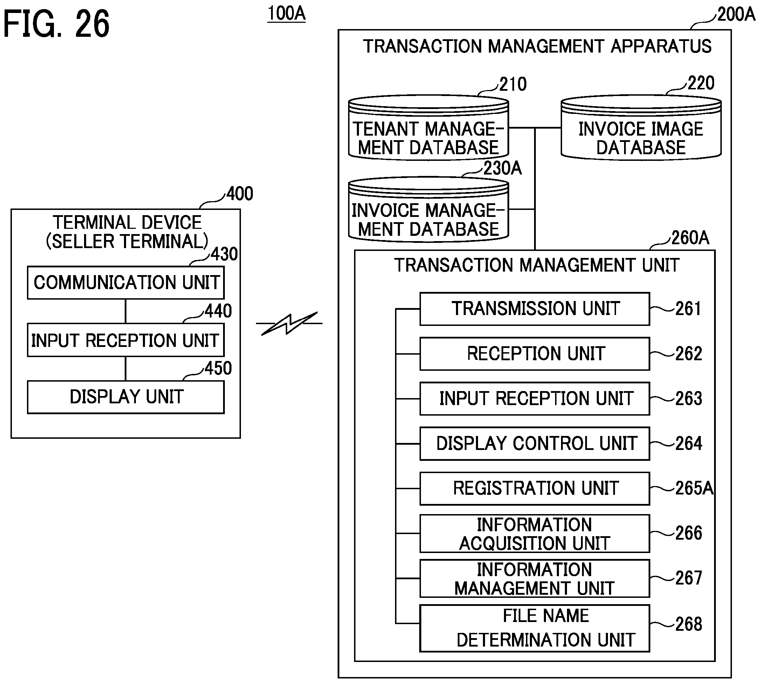

FIG. 26 is a diagram illustrating a functional configuration of each apparatus included in a transaction management system 100A according to the second embodiment.

The transaction management system 100A according to the present embodiment includes a transaction management apparatus 200A and the seller terminal 400. The transaction management system 100A is an example of an information processing system. The transaction management apparatus 200A is an example of an information processing apparatus. The transaction management apparatus 200A according to the present embodiment includes the tenant management database 210, the invoice image database 220, an invoice management database 230A, and a transaction management unit 260A.

The transaction management unit 260A according to the present embodiment includes the transmission unit 261, the reception unit 262, the input reception unit 263, the display control unit 264, a registration unit 265A, the information acquisition unit 266, the information management unit 267, and a file name determination unit 268. The functional units may be implemented by or may be caused to function by operation of any of the components illustrated in FIG. 2 according to an instruction from the CPU 201 according to a program loaded from the HD 204 to the RAM 203, for example.

The file name determination unit 268 according to the present embodiment determines whether a file name of invoice image data transmitted from the seller terminal 400 is a file name in a predetermined format or not.

When the file name of the invoice image data of an invoice created by the external system 500 is a file name in a predetermined format, the registration unit 265A registers the invoice image data and the invoice information in the transaction management system 100.

The invoice management database 230A according to the present embodiment stores, for example, invoice management information including a file name of invoice image data in a predetermined format and information identifying the external system 500.

A description is given below of the file name of the invoice image data according to the present embodiment. In recent years, the Electronic Book Storage Act defines that a tenant (corporation) keeps, or stores, a form for a certain period of time. In the Electronic Book Storage Act, it is defined, regarding documents that are stored, that relationship between related documents can be confirmed, the documents can be easily output to a screen or as paper, and documents are searchable with a search kye including a date, a business partner (customer, transaction destination), and a transaction content. In the present embodiment, information including an item that can be a search key of a form may be referred to as bibliographic information of an invoice.

In the present embodiment, when a file name that includes a part of the bibliographic information of the invoice is given, or assigned, to the file name of the invoice image data, the invoice image data is registered in the invoice management database 230A as invoice image data having a file name in a predetermined format.

At this time, in the present embodiment, information for identifying the external system 500 from which the invoice image data is output is registered in the invoice management database 230A in association with the file name of the invoice image data.

In the present embodiment, by managing the invoice image data acquired from the external system 500 in this way, the form issued by the external system 500 can be managed while matters defined for managing a form are complied with.

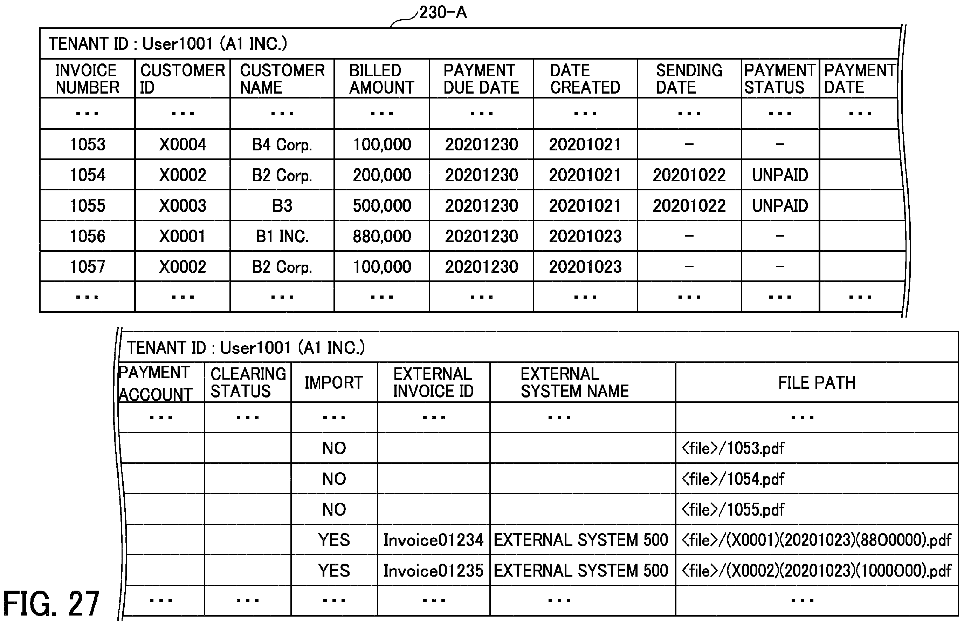

FIG. 27 is a diagram illustrating an example of an invoice management database according to the second embodiment. The invoice management database 230A according to the present embodiment includes, as information items, an invoice information number, a customer ID, a customer name, a billed amount, a payment due date, a date created, a sending date, a payment status, a payment date, a payment account, a clearing status, import, an external invoice ID, an external system name, and a file path. In other words, the invoice management database 230A includes the item of "EXTERNAL SYSTEM NAME" in addition to the items of information included in the invoice management database 230 of the first embodiment.

The value of the item of "EXTERNAL SYSTEM NAME" is a name of the external system 500 that is an issue source of the invoice identified by the corresponding external invoice ID, and is information for identifying the external system 500. In the example illustrated in FIG. 27, the information for identifying the external system 500 is the name of the external system 500, but is not limited thereto. In the present embodiment, identification information for identifying the external system 500 may be used as information for identifying the external system 500.

In the invoice management database 230A according to the present embodiment, the value of the item of "FILE PATH" indicates a storage location of the invoice image data of the invoice identified by the invoice number and a file name of the invoice image data.

In the example of FIG. 27, in the invoice management information including the invoice numbers "1056" and "1057," the value of the item of "IMPORT" is "YES," and the external invoice IDs "Invoice01234" and "Invoice01235" and the external system name "EXTERNAL SYSTEM 500" are included.

Accordingly, the invoice image data output from the external system 500 is stored in the file path included in the invoice management information including the invoice numbers "1056" and "1057."

The file name of the invoice image data included in the file path corresponding to the invoice number "1056" is "(X0001) (20201023)(880000).pdf." In other words, the file name includes the customer ID, the date created, and the billed amount. In other words, the file name is a file name in a predetermined format.

The file name of the invoice image data included in the file path corresponding to the invoice number "1057" is "(X0002) (20201023)(100000).pdf." In other words, the file name includes the customer ID, the date created, and the billed amount. In other words, the file name is a file name in a predetermined format.

As described above, in the present embodiment, the invoice image data is stored in the invoice management database 230A when the file name including the bibliographic information of the invoice is given, or assigned.

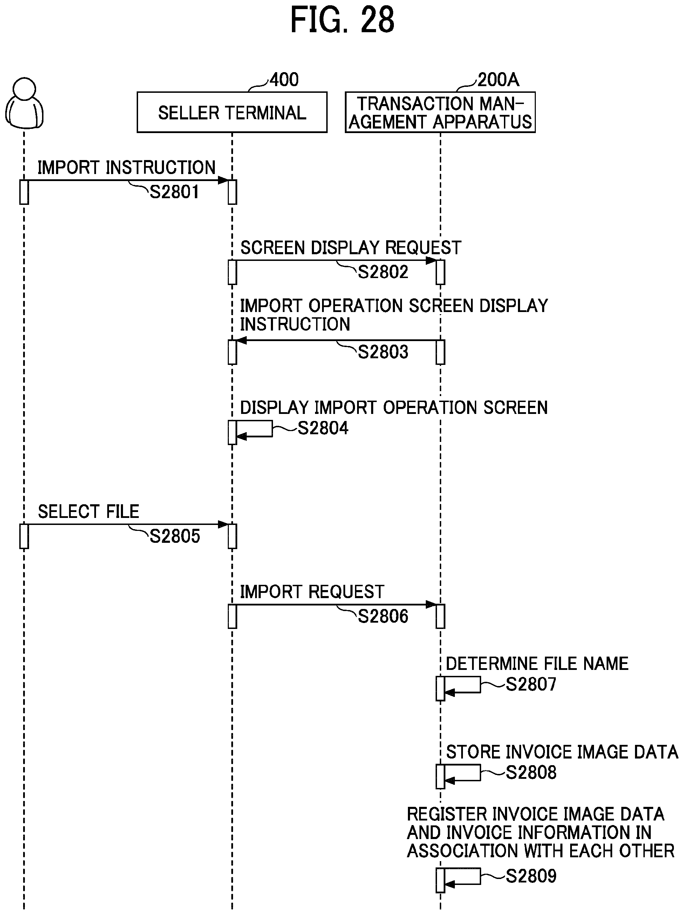

An operation of the transaction management system 100A according to the present embodiment is described below with reference to FIG. 28. FIG. 28 is a sequence diagram illustrating the operation of the transaction management system 100A according to the second embodiment. Processing of S2801 to S2806 illustrated in FIG. 28 is substantially the same as the processing of S701 to S706 illustrated in FIG. 7, and the description of the processing of S2801 to S2806 illustrated in FIG. 28 is omitted, accordingly.

When the selected PDF file and CSV file are transmitted from the seller terminal 400 in step S2806, the transaction management apparatus 200A receives the input of the PDF file and CSV file by the input reception unit 263, and determines whether the file name of the PDF file is a file name in a predetermined format or not by the file name determining unit 268 (step S2807).

In step S2807, when the file name of the PDF file is a file name in a predetermined format, the process performed by the transaction management apparatus 200A proceeds to step S2808.

Since the processing of step S2808 and step S2809 in FIG. 28 is the same as the processing of step S707 and step S708 in FIG. 7, the corresponding description is omitted.

In step S2807, when the file name of the PDF file is not a file name in a predetermined format, the transaction management apparatus 200A may display a notification indicating that the PDF file is failed to be registered, on the seller terminal 400. At this time, the transaction management apparatus 200A may cause the seller terminal 400 to display a message requesting to change the file name.

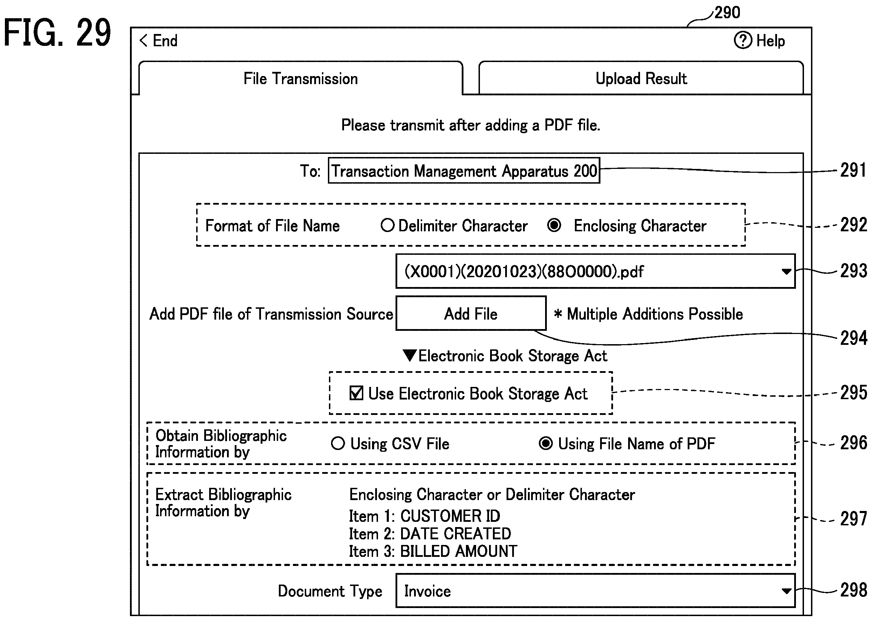

A description is given below of display examples of the seller terminal 400 with reference to FIG. 29. FIG. 29 is a diagram illustrating a display example of the seller terminal 400 according to the second embodiment. A screen 290 illustrated in FIG. 29 is an example of the import operation screen displayed on the seller terminal 400 in step S2804 of FIG. 28. For example, the screen 290 may be displayed on the seller terminal 400 as a screen for selecting a PDF file after a CSV file is selected on the screen 91 of FIG. 9, for example.

The screen 290 includes an input field 291, selection fields 292 and 293, an operation button 294, a selection field 295, display fields 296 and 297, and a selection field 298.

The input field 291 is an input field for identifying a transmission destination of the PDF file. In the input field 291 of the screen 290, the transaction management apparatus 200 is identified.

The selection field 292 is a selection field for selecting a format of a file name of the PDF file. In the present embodiment, in the file name of the PDF file, a format in which each item included in the bibliographic information is marked with a delimiter character and a format in which each item included in the bibliographic information is marked with an enclosing character are defined in advance.

In the screen 290, the enclosing character is selected. Accordingly, the file name determination unit 268 of the transaction management apparatus 200 determines that a file name in which each item included in the bibliographic information is marked with an enclosing character is a file name in a predetermined format.

The selection field 293 is a selection field for selecting a PDF file to be transmitted to the transaction management apparatus 200. On the screen 290, a PDF file having a file name of (X0001)(20201023)(8800000).pdf is selected in the selection field 293. In other words, on the screen 290, a PDF file having a file name in which each item included in the bibliographic information is indicated by an enclosing character is selected.

The operation button 294 is an operation button for transmitting the PDF file selected in the selection field 293 to the transaction management apparatus 200.

The selection field 295 is a selection field for selecting whether to use a storing method defined in the Electronic Book Storage Act or not. In the display field 296, a file from which bibliographic information is acquired (a file that is an acquisition source of bibliographic information) is displayed. In the display field 297, specified items are displayed as items of bibliographic information to be included in the file name.

On the screen 290, with the selection field 295, using the storing method defined in the Electronic Book Storage Act is selected, and the display field 296 displays that a file of which bibliographic information is to be acquired is a PDF file. In addition, in the display field 297, the items of the bibliographic information to be extracted including the customer ID, the date created, and the billed amount are displayed.

The selection field 298 is a selection field for selecting a type of form, or document. On the screen 290, an invoice is selected as a type of form.

Accordingly, in the present embodiment, among the PDF files output from the external system 500, a PDF file having a file name in which the items "CUSTOMER ID," "DATE CREATED," and "BILLED AMOUNT" extracted from the PDF file are marked with enclosing characters is stored.

According to the present embodiment, by storing a PDF file having such a file name, when the user of the seller terminal 400 searches for a PDF file, the user can search for the PDF file by using the customer ID, the date created, and the amount billed as search keys, for example.

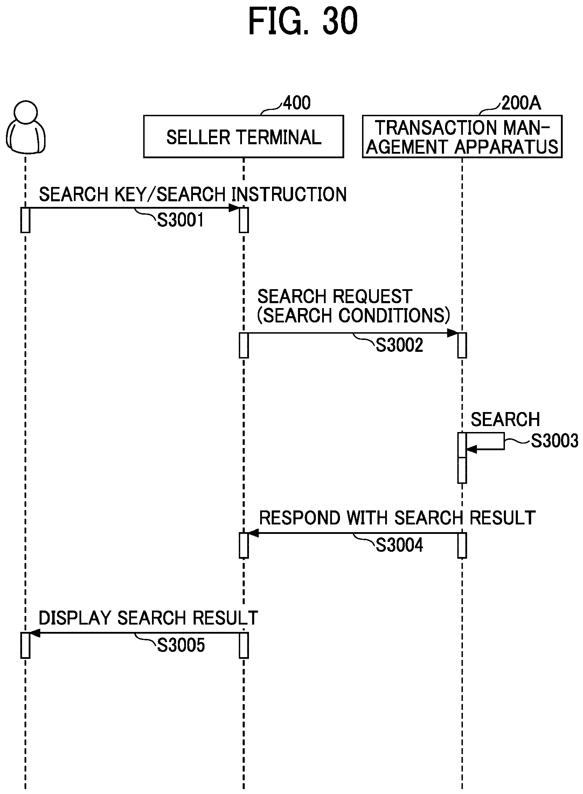

Referring to FIG. 30, a process of searching for invoice image data in the transaction management system 100A according to the present embodiment is described below. FIG. 30 is a sequence diagram illustrating an operation of the transaction management system 100A according to the second embodiment.

In the transaction management system 100A according to the present embodiment, the seller terminal 400 receives input of a search key and a search instruction according to a user operation (step S3001). At this time, a screen of a list of the PDF files that are transmitted to the transaction management apparatus 200 is displayed on the seller terminal 400, and the input of the search key and the search instruction are received on the screen of the list.

In response to receiving the input of the search key and the search instruction, the seller terminal 400 sends a search request for searching by the search key to the transaction management apparatus 200A (step S3002).

In response to receiving the search request, the transaction management apparatus 200A executes a search with respect to the invoice management database 230A (step S3003), and the transaction management apparatus 200A transmits a search result to the seller terminal 400 (step S3004).

The seller terminal 400 receives the search result and causes the display unit 450 to display the search result (step S3005).

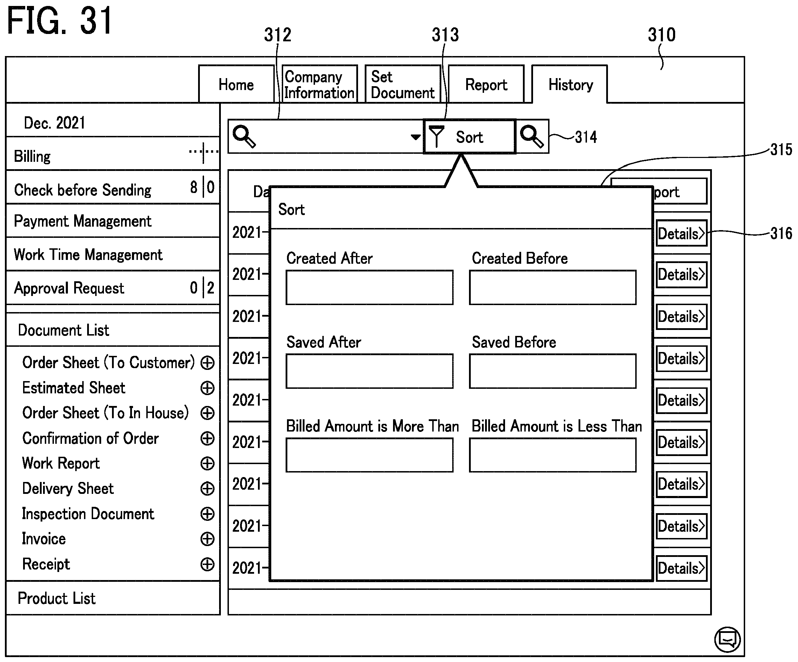

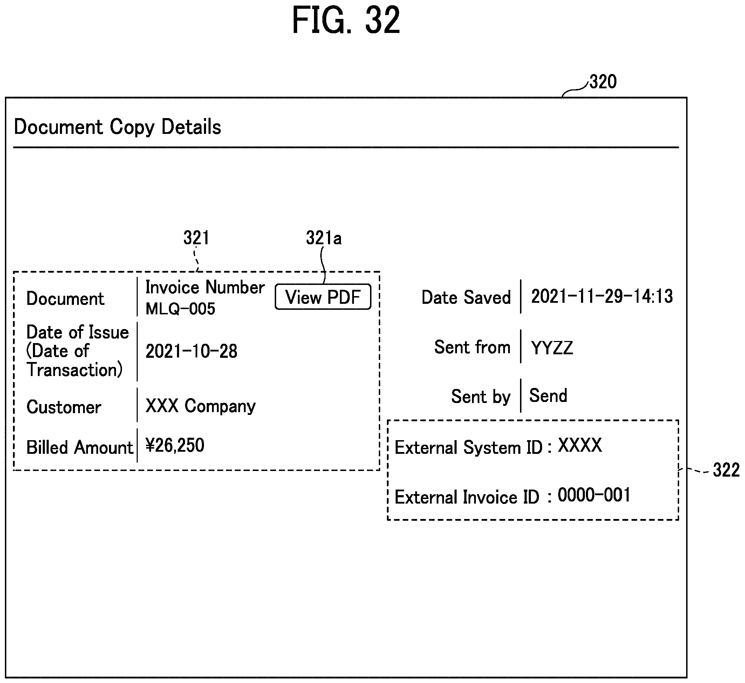

A description is given below of searching for a PDF file with reference to FIGS. 31 and 32. FIG. 31 is a diagram illustrating another display example of the seller terminal 400 according to the second embodiment.

A screen 310 illustrated in FIG. 31 is an example of the screen, which is a screen of a list of PDF files, displayed on the seller terminal 400 in step S3001 of FIG. 30.

The screen 310 includes a display field 311, an input field 312, and operation buttons 313 and 314. In the display field 311, a list of PDF files transmitted from the seller terminal 400 to the transaction management apparatus 200A are displayed. The input field 312 is an input field for inputting a search key. In the input field 312, for example, a customer name may be input.

The operation button 313 is an operation button for displaying an input field 315 for specifying a search range. The operation button 314 is an operation button for transmitting a search request to the transaction management apparatus 200A.

In the present embodiment, when the operation button 313 is selected, the input field 315 is displayed. In the input field 315, items of bibliographic information included in the file name of the PDF file is displayed. In the example of the screen 310, the input field 315 includes an input field for specifying a range of date created of the PDF file and an input field for specifying a range of billed amount. Note that the input field 315 may include items other than the date created and the billed amount. In addition, the input field 315 may include an input field for an external form ID.

In addition, in the display field 311, an operation button 316 is displayed for each PDF file in the list is displayed. In the present embodiment, when the operation button 316 is selected, details of the corresponding PDF file may be displayed on the seller terminal 400.

FIG. 32 is a third diagram illustrating still another display example of the seller terminal 400 according to the second embodiment. A screen 320 illustrated in FIG. 32 is an example of a screen displayed when the operation button 316 illustrated in FIG. 31 is selected.

The screen 320 includes display fields 321 and 322. In the display field 321, the bibliographic information such as the date created, the customer name, and the billed amount of the PDF file corresponding to the operation button 316 is displayed.

In the display field 322, information for identifying the external system 500 serving as an output source of the PDF file of which the bibliographic information is displayed and an external invoice ID for identifying the PDF file are displayed.

The display field 321 also includes an operation button 321a. In the present embodiment, when the operation button 321a is operated, the PDF file of which bibliographic information is displayed on the screen 320 is displayed on the seller terminal 400.

As described above, according to the present embodiment, the seller terminal 400 can allow the user to view the list of PDF files transmitted to the transaction management apparatus 200A. In addition, according to the present embodiment, a PDF file can be easily searched, and the seller terminal 400 can easily display the bibliographic information of the searched PDF file and the invoice image data indicated by the PDF file. In addition, according to the present embodiment, since the information for identifying the external system 500 which is the issuer of the PDF file is displayed on the seller terminal 400, the user of the seller terminal 400 can easily recognize the relationship between the transaction management apparatus 200A and the issuer of the PDF file.

### Third embodiment:

A third embodiment is described below with reference to the drawings. The third embodiment is different from the second embodiment in that the transaction management apparatus assigns a file name to a PDF file received from the external system 500. Therefore, in the following description of the third embodiment, differences from the second embodiment are described. In the following description of the third embodiment, the same reference numerals are given to the same or corresponding functions or configurations as those of the second embodiment, and redundant descriptions thereof are omitted or simplified appropriately.

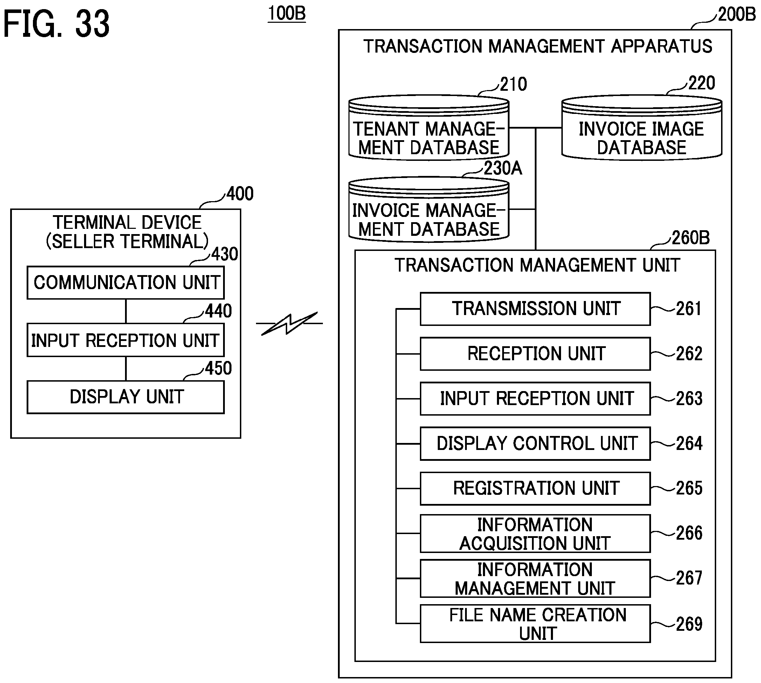

FIG. 33 is a diagram illustrating a functional configuration of each apparatus included in a transaction management system 100B according to the third embodiment.

The transaction management system 100B according to the present embodiment includes a transaction management apparatus 200B and the seller terminal 400. The transaction management system 100B is an example of an information processing system. The transaction management apparatus 200B is an example of an information processing apparatus. The transaction management apparatus 200B according to the present embodiment includes the tenant management database 210, the invoice image database 220, the invoice management database 230A, and a transaction management unit 260B.

The transaction management unit 260B includes the transmission unit 261, the reception unit 262, the input reception unit 263, the display control unit 264, the registration unit 265, the information acquisition unit 266, the information management unit 267, and a file name creation unit 269. The functional units may be implemented by or may be caused to function by operation of any of the components illustrated in FIG. 2 according to an instruction from the CPU 201 according to a program loaded from the HD 204 to the RAM 203, for example.

The file name creation unit 269 according to the present embodiment causes the seller terminal 400 to display a setting screen for setting items of bibliographic information to be included in a file name, creates a file name corresponding to the set items, and sets a PDF file as a PDF file having the created file name.

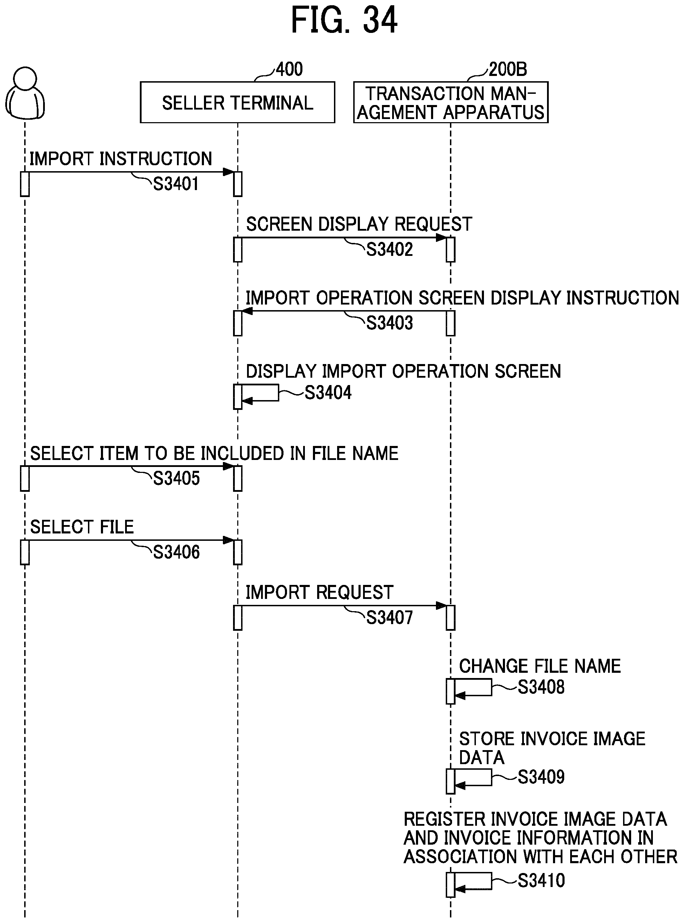

An operation of the transaction management system 100B according to the present embodiment is described below with reference to FIG. 34. FIG. 34 is a sequence diagram illustrating an operation of the transaction management system 100B according to the third embodiment.

Processing of S3401 to S3404 illustrated in FIG. 34 is substantially the same as the processing of S701 to S704 illustrated in FIG. 7, and the description of the processing of S3401 to S3404 illustrated in FIG. 34 is omitted, accordingly.

The seller terminal 400 receives selection of an item of bibliographic information to be included in the file name on the import operation screen (step S3405). In other words, the seller terminal 400 receives settings of one or more items of the bibliographic information to be included in the file name on the import operation screen.

Subsequently, the seller terminal 400 receives selection of a PDF file and a CSV file (step S3406).

Subsequently, when the PDF file and the CSV file are selected, the seller terminal 400 transmits an import request for importing the selected two files to the transaction management apparatus 200 (step S3407). At this time, the selected PDF file and CSV file are also transmitted to the transaction management apparatus 200. In the present embodiment, the import request may include information indicating the one or more items of the bibliographic information set in step S3405.

In response to receiving input of the PDF file and the CSV file, by the input reception unit 263, the transaction management apparatus 200B changes the file name of the PDF file, by the file name creation unit 269 (step S3408).

Specifically, the file name creation unit 269 extracts the values of the set items from the PDF file based on the items of the bibliographic information set in step S3405. Then, the file name creation unit 269 creates a file name including the values of the extracted items, and rewrites the file name of the PDF file to the created file name.

Since the processing of step S3409 and step S3410 in FIG. 34 is the same as the processing of step S707 and step S708 in FIG. 7, the corresponding description is omitted.

In the example of FIG. 34, when the import instruction is received from the seller terminal 400, the item of the bibliographic information to be included in the file name is set, but the present disclosure is not limited thereto. Setting the item of the bibliographic information to be included in the file name may be executed at a timing different from the timing of the import instruction.

A description is given below of an import operation screen according to the present embodiment. The import operation screen according to the present embodiment may be, for example, a screen in which the items of bibliographic information displayed in the display field 297 are selectable on the screen 290 illustrated in FIG. 29.

By displaying such a screen on the seller terminal 400, in the present embodiment, the user of the seller terminal 400 can set a format of the file name of the PDF file.

In addition, according to the present embodiment, since the file name of the PDF file received from the seller terminal 400 is rewritten to the file name including the item of the bibliographic information set in advance, an operation with respect to a file name of the PDF file in the external system 500 is not necessary, resulting in improvement in versatility.

### Fourth Embodiment:

A fourth embodiment is described below with reference to the drawings. The fourth embodiment is different from the third embodiment in that a PDF file is captured from a specified external system 500 by rewriting the file name to a file name in a predetermined format. Therefore, the description of the fourth embodiment is given of the differences from the third embodiment. The same reference numerals are given to the same or corresponding functions or configurations as those of the third embodiment, and redundant descriptions thereof are omitted or simplified appropriately.

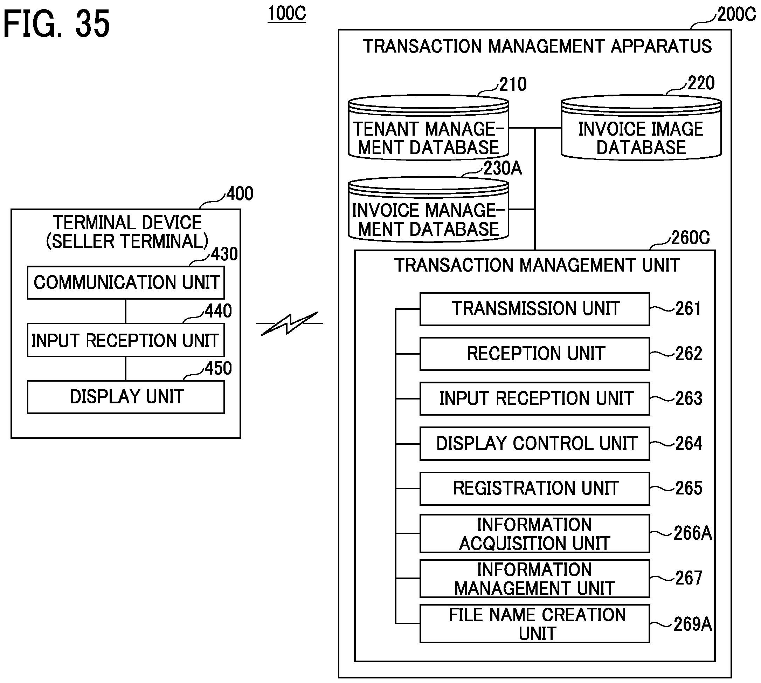

FIG. 35 is a diagram illustrating a functional configuration of each apparatus included in a transaction management system 100C according to the fourth embodiment.

The transaction management system 100C according to the present embodiment includes a transaction management apparatus 200C and the seller terminal 400. The transaction management system 100C is an example of an information processing system. The transaction management apparatus 200C is an example of an information processing apparatus. The transaction management apparatus 200C according to the present embodiment includes the tenant management database 210, the invoice image database 220, the invoice management database 230A, and a transaction management unit 260C.

The transaction management unit 260C includes the transmission unit 261, the reception unit 262, the input reception unit 263, the display control unit 264, the registration unit 265, an information acquisition unit 266A, the information management unit 267, and a file name creation unit 269A. The functional units may be implemented by or may be caused to function by operation of any of the components illustrated in FIG. 2 according to an instruction from the CPU 201 according to a program loaded from the HD 204 to the RAM 203, for example.

When the external system 500 is specified in the seller terminal 400, the information acquisition unit 266A according to the present embodiment acquires a PDF file and a CSV file managed in the specified external system 500.

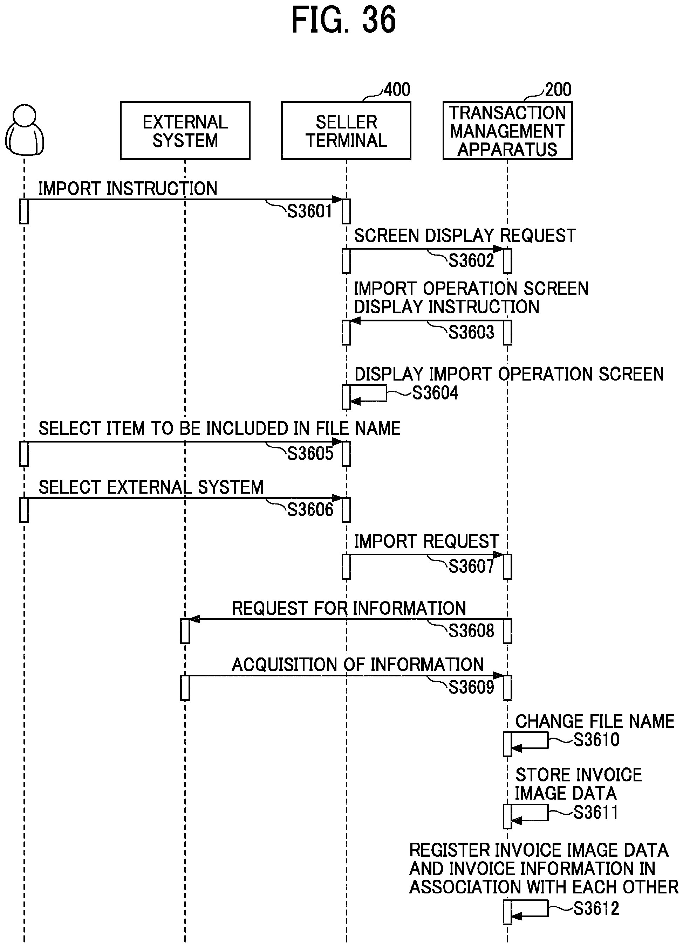

An operation of the transaction management system 100C according to the present embodiment is described below with reference to FIG. 36. FIG. 36 is a sequence diagram illustrating the operation of the transaction management system 100C according to the fourth embodiment.

Processing of S3601 to S3605 illustrated in FIG. 36 is substantially the same as the processing of S3401 to S3405 illustrated in FIG. 34, and the description of the processing of S3601 to S3605 illustrated in FIG. 36 is omitted, accordingly.

The seller terminal 400 receives an operation of specifying the external system 500 on the import operation screen (step S3606).

Subsequently, the seller terminal 400 receives selection of a PDF file and a CSV file (step S3606).

Subsequently, when the PDF file and the CSV file are selected, the seller terminal 400 transmits an import request for importing the selected two files to the transaction management apparatus 200C (step S3607). At this time, the import request may include information indicating the external system 500 specified in step S3606.

In response to receiving the import request, the transaction management apparatus 200C transmits an information acquisition request to the specified external system 500, by the information acquisition unit 266A (step S3608).

Then, the information acquisition unit 266A acquires the PDF file and the CSV file from the external system 500 (step S3609).

Next, in the transaction management apparatus 200C, the file name creation unit 269A changes the file name of the acquired PDF file (step S3610). Details of the processing at step S3610 are substantially the same as those at step S3408 in FIG. 34.

Since the processing of step S3611 and step S3612 in FIG. 36 is the same as the processing of step S707 and step S708 in FIG. 7, the corresponding description is omitted.

A description is given below of an import operation screen according to the present embodiment. The import operation screen according to the present embodiment may be, for example, a screen in which the items of bibliographic information displayed in the display field 297 are selectable on the screen 290 illustrated in FIG. 29.

On the import operation screen according to the present embodiment, in alternative to selecting the PDF file to be transmitted to the transaction management apparatus 200 in the selection field 293 of the screen 290, the external system 500 from which the PDF file and the CSV file are to be acquired may be selected.

According to the present embodiment, as described above, by specifying the external system 500 from which the PDF file and the CSV file are to be acquired and setting a format of the file name of the PDF file, the PDF file to which the file name of the set format is assigned can be automatically imported. Accordingly, in the present embodiment, files does not have to be selected individually to be imported by the seller terminal 400, resulting in improvement in convenience.

Each of the functional units of the above-described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

The apparatuses or devices described in the embodiments described above are merely one example of plural computing environments that implement one or more embodiments of the disclosure.

In some embodiments, the transaction management apparatus 200 includes multiple computing devices, such as a server cluster. The plurality of computing devices is configured to communicate with one another via any type of communication link, including a network or shared memory to implement the processing described in the present embodiment. In substantially the same manner, for example, the transaction management apparatus 200 includes such multiple computing devices configured to communicate with one another.

Further, the transaction management apparatus 200 can be configured to share the disclosed processes in various combinations. For example, a process executed by the transaction management apparatus 200 may be executed by another server apparatus. Similarly, a function of the transaction management apparatus 200 may be performed by another server apparatus. Each functional configuration of the server apparatus and the other server apparatus may be combined into one server or may be divided into a plurality of devices.

The correspondence tables according to the above-described embodiments may be generated by machine learning. By classifying keywords and accounting items that can be included in transaction content, the use of the correspondence tables may be optional.

In the present disclosure, the machine learning is defined as a technology that makes a computer to acquire human-like learning ability. In addition, the machine learning refers to a technology in which a computer autonomously generates an algorithm required for determination such as data identification from learning data loaded in advance and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

Although the description above is given based on each of the above-described embodiments, the present disclosure is not limited to the requirements described in the above embodiments. In regard to these points, the configuration can be modified without departing from the spirit of the present disclosure, and can be appropriately set according to an applied configuration.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (200), comprising
an input reception unit (201, 263) configured to receive an import operation for importing form image data of a form and form information included in the form;
a registration unit (201, 265) configured to register form management information in which the form image data and the form information are associated with each other; and
a display control unit (201, 264) configured to display, on a terminal device (400), a management screen for managing the form, based on the form management information.

2. The information processing apparatus (200) of claim 1, further comprising:
a transmission unit (261, 264) configured to transmit the form image data to a transmission destination,
wherein the display control unit (201, 264) displays, on the terminal device (400), the management screen for managing the form after the transmission unit (261, 264) transmits the form image data to the transmission destination.

3. The information processing apparatus (200) of any one of claims 1 and 2, wherein the display control unit (201, 264) displays, on the terminal device (400), a reception screen for receiving the import operation.

4. The information processing apparatus (200) of claim 3, wherein the reception screen includes a selection field for selecting the form image data and a file that indicates the form information.

5. The information processing apparatus (200) of any one of claims 1 to 4, wherein the form information that is input according to the import operation is prohibited to be edited.

6. The information processing apparatus (200) of any one of claims 1 to 4, further comprising
a determination unit (201, 268) configured to determine whether a file name in a predetermined format is given to the form image data,
wherein the registration unit (201, 265) registers the form management information in which the form image data and the form information are associated with each other, in a case that the form image data determined to have the file name in the predetermined format by the determination unit (201, 268) is imported.

7. The information processing apparatus (200) of claim 6, wherein the file name includes a part of bibliographic information of the form image data.

8. An information processing system (100, 100A, 100B, 100C), comprising:
the information processing apparatus (200) of any one of claims 1 to 7; and
a terminal device (400) including a display unit (401, 450) configured to display, on a display (418), the management screen.

9. An information processing method, comprising:
receiving (S706, S2806, S3407, S3607) an import operation for importing form image data of a form and form information included in the form;
registering (S708, S2809, S3410, S3612) form management information in which the form image data and the form information are associated with each other; and
displaying (S1707), on a terminal device (400), a management screen for managing the form, based on the form management information.

10. A carrier means carrying computer readable codes for controlling a computer system to carry out the method of claim 9.
